(19) Europäisches Patentamt
European Patent Office
Office européen des brevets

(11) **EP 4 254 170 A1**

(12) **EUROPEAN PATENT APPLICATION**

(43) Date of publication:
**04.10.2023 Bulletin 2023/40**

(21) Application number: **23164861.9**

(22) Date of filing: **28.03.2023**

(51) International Patent Classification (IPC):
**G06F 7/509** (2006.01)   **G06F 7/53** (2006.01)
**G06F 7/74** (2006.01)

(52) Cooperative Patent Classification (CPC):
**G06F 7/5095; G06F 7/5324;** G06F 7/74;
G06F 2207/3812

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 GB 202204647**

(71) Applicant: **Imagination Technologies Limited
Kings Langley, Hertfordshire WD4 8LZ (GB)**

(72) Inventors:
• **NAZAR, Faizan
  Kings Langley, WD4 8LZ (GB)**
• **ROVERS, Kenneth
  Kings Langley, WD4 8LZ (GB)**

(74) Representative: **CMS Cameron McKenna Nabarro
Olswang LLP
Cannon Place
78 Cannon Street
London EC4N 6AF (GB)**

(54) **ACCUMULATOR HARDWARE**

(57) Accumulator hardware logic is described. In an example, the accumulator hardware logic comprises first and second addition logic units and a store. The first addition logic unit comprises a first input, a second input and an output, each of the first and second inputs arranged to receive an input value in each clock cycle. The second addition logic unit comprises a first input that is connected directly to the output of the first addition logic unit. It also comprises a second input and an output. The store is arranged to store a result output by the second addition logic unit. The accumulator hardware logic further comprises shifting hardware and/or negation hardware positioned in a feedback path between the store and the second input of the second addition logic unit. The shifting hardware is configured to perform a shift by a fixed number of bit positions in a fixed direction.

FIG. 1

EP 4 254 170 A1

**Description**

Cross-Reference to Related Application

This application claims priority from UK patent application 2204647.8 filed on 31 March 2022, which is herein incorporated by reference in its entirety.

Background

When implementing a convolutional neural network, it is necessary to perform large numbers of multiplications of pairs of values, each pair comprising an input value and a corresponding filter weight (which may also be referred to as a 'coefficient'), and then sum the multiplication results. In order to increase the speed of operation, these operations may be implemented in dedicated hardware logic. Dependent upon the bit-widths of the input values and weights, the resulting hardware may be quite large (e.g. in terms of area) and may consume significant amounts of power.

The embodiments described below are provided by way of example only and are not limiting of implementations which solve any or all of the disadvantages of known hardware implementations of convolution engines.

Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Accumulator hardware logic is described. In an example, the accumulator hardware logic comprises first and second addition logic units and a store. The first addition logic unit comprises a first input, a second input and an output, each of the first and second inputs arranged to receive an input value in each clock cycle. The second addition logic unit comprises a first input that is connected directly to the output of the first addition logic unit. It also comprises a second input and an output. The store is arranged to store a result output by the second addition logic unit. The accumulator hardware logic further comprises shifting hardware and/or negation hardware positioned in a feedback path between the store and the second input of the second addition logic unit. The shifting hardware is configured to perform a shift by a fixed number of bit positions in a fixed direction.

The invention is set out in the appended set of claims.

A first aspect provides accumulator hardware logic comprising: a first addition logic unit comprising a first input, a second input and an output, each of the first and second inputs arranged to receive an input value in each clock cycle; a second addition logic unit comprising a first input, a second input and an output and wherein the first input is connected directly to the output of the first addition logic unit; a store arranged to store a result output by the second addition logic unit; and at least one of shifting hardware and negation hardware positioned in a feedback path between the store and the second input of the second addition logic unit, wherein the shifting hardware is configured to perform a shift by a fixed number of bit positions in a fixed direction.

The accumulator hardware logic may comprise shifting hardware positioned in the feedback path.

The second input of the second addition logic unit may be connected to the feedback path comprising the shifting hardware.

The accumulator hardware logic may further comprise: selection hardware positioned in the feedback path and configured to select a first zero input in a first clock cycle of an accumulation operation and to select a second input from the store in subsequent clock cycles of the accumulation operation.

The selection hardware may be positioned in the feedback path between the store and the shifting hardware.

The selection hardware may be positioned in the feedback path between the shifting hardware and the second addition logic unit.

The accumulator hardware logic may further comprise: variable shifting logic configured to perform a shift by a controllable number of bit positions in a controllable direction, wherein the variable shifting logic comprises an input arranged to receive a value output by the second addition logic unit.

The controllable number may be zero for each clock cycle of an accumulation operation except for a final clock cycle of the accumulation operation.

The variable shifting logic may comprise an output to the store and the store may be arranged to store the result output by the second addition logic unit and received from the variable shifting logic.

The accumulator hardware logic may further comprise: a second store arranged to store a result output by the variable shifting logic.

The accumulator hardware logic may further comprise both shifting hardware and negation hardware logic positioned in the feedback path.

A second aspect provides multiplication hardware comprising the accumulator hardware logic as described herein.

The multiplication hardware may be arranged to multiply two values together over two clock cycles and may further comprise: a first multiplier arranged to receive a first input and a second input each clock cycle, multiply the first and second inputs together and output the result; a second multiplier arranged to receive a third input and a fourth input each clock cycle, multiply the third and fourth inputs and output the result to the second input of the accumulator hardware logic; and left-shifting hardware arranged to receive the output from the first multiplier, perform left shifting by a predefined number of bits and output a result to the first input of the accumulator hardware logic, wherein: each of the two values are divided into a high part and a low part, the low parts each comprising the predefined number of least significant bits of the value and the high parts each comprising all remaining bits of the value, in a first clock cycle, the first and second inputs are the high parts of the two values and the third and fourth inputs are the high part of a first of the two values and the low part of a second of the two values, in a second clock cycle, the third and fourth inputs are the low parts of the two values and the first and second inputs are the high part of the second of the two values and the low part of the first of the two values.

The multiplication hardware may be arranged to multiply two values together over two clock cycles and may further comprise: a first plurality of multipliers each arranged to receive a different pair of inputs each clock cycle, multiply the pair of inputs together and output the result; a second plurality of multipliers each arranged to receive a different pair of inputs together and output the result; a third multiplier arranged to receive a pair of inputs each clock cycle, multiply the pair of inputs together and output the result; a fourth multiplier arranged to receive a pair of inputs each clock cycle, multiply the pair of inputs together and output the result; a first plurality of left-shifting hardware, each arranged to receive a result from a different one of the first plurality of multipliers and output a left-shifted result; a second plurality of left-shifting hardware, each arranged to receive a result from a different one of the second plurality of multipliers and output a left-shifted result; a first plurality of negation hardware, each arranged to receive a left-shifted result from a different one of the first plurality of left-shifting hardware; a second plurality of negation hardware, each arranged to receive a left-shifted result from a different one of the second plurality of left-shifting hardware; first addition logic arranged to receive and sum the results output by each of the first plurality of negation hardware and the third multiplier; second addition logic arranged to receive and sum the results output by each of the second plurality of negation hardware and the fourth multiplier and output the result to the second input of the accumulator hardware logic; and left-shifting hardware arranged to receive the output from the first addition logic, perform left shifting by a predefined number of bits and output a result to the first input of the accumulator hardware logic, wherein: each of the two values are divided into a high part and a low part, the low parts each comprising the predefined number of least significant bits of the value and the high parts each comprising all remaining bits of the value, and each of the high parts and low parts are further divided into a portion comprising a most significant bit and a portion comprising all other bits of the part, in a first clock cycle, the pair of inputs to the third multiplier are the portions of the high parts of the two values that comprise all bits apart from the most significant bits, the pairs of inputs to the first plurality of multipliers comprise a pair comprising the most significant bits of the high part of each input value and a plurality of pairs comprising other combinations of portions of the high parts of the two values, the pair of inputs to the fourth multiplier are the portion of the high part of a first of the input values comprising all bits apart from the most significant bits and the portion of the low part of a second of the input values comprising all bits apart from the most significant bits, and the pairs of inputs to the second plurality of multipliers comprise a pair comprising the most significant bits of the high part of each input value and a plurality of pairs comprising other combinations of a portion from the high part of one input value and a portion from the low part of the other input value, in a second clock cycle, the pair of inputs to the third multiplier are the portion of the high part of the second of the input values comprising all bits apart from the most significant bits and the portion of the low part of the first of the input values comprising all bits apart from the most significant bits, the pairs of inputs to the first plurality of multipliers comprise a plurality of pairs comprising other combinations of a portion from the high part of one input value and a portion from the low part of the other input value, the pair of inputs to the fourth multiplier are the portions of the low parts of the two values that comprise all bits apart from the most significant bits, and the pairs of inputs to the second plurality of multipliers comprise a pair comprising the most significant bits of the high part of each input value and a plurality of pairs comprising other combinations of portions of the low parts of the two values.

A third aspect provides convolution hardware comprising the accumulator hardware logic as described herein.

The convolution hardware may be arranged to multiply N pairs of two values together over two clock cycles and may further comprise: N first multipliers, each arranged to receive a first input and a second input each clock cycle, multiply the first and second inputs together and output the result; first addition logic arranged to sum the results output by each of the N first multipliers; N second multipliers, each arranged to receive a third input and a fourth input each clock cycle, multiply the third and fourth inputs and output the result; second addition logic arranged to sum the results output by each of the N second multipliers and output the result to the second input of the accumulator hardware logic; and left-shifting hardware arranged to receive the output from the first addition logic, perform left shifting by a predefined number of bits and output a result to the first input of the accumulator hardware logic, wherein, for each pair of values:

each of the values are divided into a high part and a low part, the low parts each comprising the predefined number of least significant bits of the value and the high parts each comprising all remaining bits of the value, in a first clock cycle, the first and second inputs to one of the first multipliers are the high parts of the two values and the third and fourth inputs to one of the second multipliers are the high part of a first of the two values and the low part of a second of the two values, each of the N first multipliers receiving parts from a different pair of values, in a second clock cycle, the third and fourth inputs to the one of the second multipliers are the low parts of the two values and the first and second inputs to the one of the first multipliers are the high part of the second of the two values and the low part of the first of the two values.

The multiplication hardware may be arranged to multiply N pairs of two values together over two clock cycles and may further comprise: a first plurality of groups of N multipliers each multiplier arranged to receive a different pair of inputs each clock cycle, multiply the pair of inputs together and output the result; a second plurality of groups of N multipliers each multiplier arranged to receive a different pair of inputs each clock cycle, multiply the pair of inputs together and output the result; N third multipliers arranged to receive a pair of inputs each clock cycle, multiply the pair of inputs together and output the result; N fourth multipliers arranged to receive a pair of inputs each clock cycle, multiply the pair of inputs together and output the result; a first plurality of addition logic elements each arranged to sum the results output by a group of N multipliers of the first plurality of groups of N multipliers; a second plurality of addition logic elements each arranged to sum the results output by a group of N multipliers of the second plurality of groups of N multipliers; a third addition logic element arranged to sum the results output by the N third multipliers; a fourth addition logic element arranged to sum the results output by the N fourth multipliers; a first plurality of left-shifting hardware, each arranged to receive a result from a different one of the first plurality of addition logic elements and output a left-shifted result; a second plurality of left-shifting hardware, each arranged to receive a result from a different one of the second plurality of addition logic elements and output a left-shifted result; a first plurality of negation hardware, each arranged to receive a left-shifted result from a different one of the first plurality of left-shifting hardware; a second plurality of negation hardware, each arranged to receive a left-shifted result from a different one of the second plurality of left-shifting hardware; first addition logic arranged to receive and sum the results output by each of the first plurality of negation hardware and the third addition logic element; second addition logic arranged to receive and sum the results output by each of the second plurality of negation hardware and the fourth addition logic element and output the result to the second input of the accumulator hardware logic; and left-shifting hardware arranged to receive the output from the first addition logic, perform left shifting by a predefined number of bits and output a result to the first input of the accumulator hardware logic, wherein, for each pair of values: each of the two values are divided into a high part and a low part, the low parts each comprising the predefined number of least significant bits of the value and the high parts each comprising all remaining bits of the value, and each of the high parts and low parts are further divided into a portion comprising a most significant bit and a portion comprising all other bits of the part, in a first clock cycle, the pair of inputs to one of the N third multipliers are the portions of the high parts of the two values that comprise all bits apart from the most significant bits, the pairs of inputs to one of the multipliers from each group of N multipliers in the first plurality of groups of N multipliers comprise a pair comprising the most significant bits of the high part of each input value and a plurality of pairs comprising other combinations of portions of the high parts of the two values, the pair of inputs to one of the N fourth multipliers are the portion of the high part of a first of the input values comprising all bits apart from the most significant bits and the portion of the low part of a second of the input values comprising all bits apart from the most significant bits, and the pairs of inputs to one of the multipliers from each group of N multipliers in the second plurality of groups of N multipliers comprise a pair comprising the most significant bits of the high part of each input value and a plurality of pairs comprising other combinations of a portion from the high part of one input value and a portion from the low part of the other input value, in a second clock cycle, the pair of inputs to one of the N third multipliers are the portion of the high part of the second of the input values comprising all bits apart from the most significant bits and the portion of the low part of the first of the input values comprising all bits apart from the most significant bits, the pairs of inputs to one of the multipliers from each group of N multipliers in the first plurality of groups of N multipliers comprise a plurality of pairs comprising other combinations of a portion from the high part of one input value and a portion from the low part of the other input value, the pair of inputs to one of the N fourth multipliers are the portions of the low parts of the two values that comprise all bits apart from the most significant bits, and the pairs of inputs to one of the multipliers from each group of N multipliers in the second plurality of groups of N multipliers comprise a pair comprising the most significant bits of the high part of each input value and a plurality of pairs comprising other combinations of portions of the low parts of the two values.

A fourth aspect provides a neural network accelerator comprising convolution hardware as described herein.

A fifth aspect provides a method of performing accumulation in hardware logic, the method comprising: receiving, by a first addition logic unit a first input value via a first input and a second input value via a second input in each clock cycle; receiving, by a second addition logic unit, an input directly from the output of the first addition logic unit and an input from a feedback path from a store, the feedback path comprising at least one of shifting hardware and negation hardware, wherein the shifting hardware is configured to perform a shift by a fixed number of bit positions in a fixed direction; and storing, in a store, a result output by the second addition logic unit.

A sixth aspect provides a method of performing multiplication using the method of performing accumulation described herein.

A seventh aspect provides a method of performing convolutions using the method of performing accumulation described herein.

An eight aspect provides a method of manufacturing, using an integrated circuit manufacturing system, accumulator hardware logic as described herein, multiplication hardware as described herein, convolution hardware as described herein or a neural network accelerator as described herein.

A ninth aspect provides an integrated circuit definition dataset that, when processed in an integrated circuit manufacturing system, configures the integrated circuit manufacturing system to manufacture accumulator hardware logic as described herein, multiplication hardware as described herein, convolution hardware as described herein or a neural network accelerator as described herein.

A tenth aspect provides a non-transitory computer readable storage medium having stored thereon a computer readable description of an integrated circuit that, when processed in an integrated circuit manufacturing system, causes the integrated circuit manufacturing system to manufacture accumulator hardware logic as described herein, multiplication hardware as described herein, convolution hardware as described herein or a neural network accelerator as described herein.

An eleventh aspect provides an integrated circuit manufacturing system configured to manufacture accumulator hardware logic as described herein, multiplication hardware as described herein, convolution hardware as described herein or a neural network accelerator as described herein.

A twelfth aspect provides an integrated circuit manufacturing system comprising: a non-transitory computer readable storage medium having stored thereon a computer readable description of an integrated circuit that describes accumulator hardware logic as described herein, multiplication hardware as described herein, convolution hardware as described herein or a neural network accelerator as described herein; a layout processing system configured to process the integrated circuit description so as to generate a circuit layout description of an integrated circuit embodying the accumulator hardware logic, multiplication hardware, convolution hardware or neural network accelerator; and an integrated circuit generation system configured to manufacture the accumulator hardware logic, multiplication hardware, convolution hardware or neural network accelerator according to the circuit layout description.

The accumulator hardware logic, multiplication hardware, convolution hardware or neural network accelerator may be embodied in hardware on an integrated circuit. There may be provided a method of manufacturing, at an integrated circuit manufacturing system, accumulator hardware logic, multiplication hardware, convolution hardware or neural network accelerator. There may be provided an integrated circuit definition dataset that, when processed in an integrated circuit manufacturing system, configures the system to manufacture accumulator hardware logic, multiplication hardware, convolution hardware or neural network accelerator. There may be provided a non-transitory computer readable storage medium having stored thereon a computer readable description of an integrated circuit that, when processed, causes a layout processing system to generate a circuit layout description used in an integrated circuit manufacturing system to manufacture accumulator hardware logic, multiplication hardware, convolution hardware or neural network accelerator.

There may be provided an integrated circuit manufacturing system comprising: a non-transitory computer readable storage medium having stored thereon a computer readable integrated circuit description that describes the accumulator hardware logic, multiplication hardware, convolution hardware or neural network accelerator; a layout processing system configured to process the integrated circuit description so as to generate a circuit layout description of an integrated circuit embodying the accumulator hardware logic, multiplication hardware, convolution hardware or neural network accelerator; and an integrated circuit generation system configured to manufacture the accumulator hardware logic, multiplication hardware, convolution hardware or neural network accelerator according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

Brief Description of the Drawings

Examples will now be described in detail with reference to the accompanying drawings in which:

FIG. 1 is a schematic diagram of a first example of improved accumulator hardware logic;

FIG. 2 is a schematic diagram of a second example of improved accumulator hardware logic;

FIG. 3 is a schematic diagram of a third example of improved accumulator hardware logic;

FIG. 4 is a schematic diagram of a fourth example of improved accumulator hardware logic;

FIG. 5 is a schematic diagram of a fifth example of improved accumulator hardware logic;

FIG. 6 is a schematic diagram of a sixth example of improved accumulator hardware logic;

FIG. 7 shows a graphical representation of how a multiplication operation may be split into multiple smaller operations;

FIG. 8 is a schematic diagram of example of multiplication logic that comprises improved accumulator hardware logic;

FIG. 9 is a schematic diagram of example of convolution hardware logic that comprises improved accumulator hardware logic;

FIG. 10 shows another graphical representation of how a multiplication operation may be split into multiple smaller operations;

FIG. 11 shows a further graphical representation of how a multiplication operation may be split into multiple smaller operations;

FIG. 12 is a schematic diagram of another example of multiplication logic;

FIG. 13 is a schematic diagram of another example of convolution hardware logic;

FIG. 14 shows a computer system in which the accumulator hardware logic, multiplication logic and/or convolution logic may be implemented; and

FIG. 15 shows an integrated circuit manufacturing system for generating an integrated circuit embodying the accumulator hardware logic, multiplication logic or convolution logic described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

Detailed Description

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, when implementing a convolutional neural network, it is necessary to perform large numbers of multiplications of pairs of values, each pair comprising an input value and a corresponding filter weight, and then sum the multiplication results and these operations may be implemented in hardware logic. Where the bit-width of the input values and weights is large (e.g. 16-bits or more), the resulting hardware may be large. Furthermore, in some implementations, the bit-widths of the input values and weights may not be fixed but may instead vary. In such situations, the hardware must be designed to handle the largest possible bit-widths (e.g. 16-bits), but this may result in inefficient use of the hardware where the inputs values and weights have smaller bit-widths (e.g. 12, 8 or 4-bits).

In order to reduce the size of the hardware logic and/or to increase the efficiency where the bit-width varies, the operations may be performed over more than one clock cycle for at least a subset of the possible bit-widths (e.g. for the larger / largest of the possible bit-widths). Where the operations are performed over more than one clock cycle, accumulator hardware is used to store and sum the partial results from consecutive clock cycles.

Described herein is improved accumulator hardware logic which may be used in the application described above (i.e. storing and summing the partial results from consecutive clock cycles in a convolution engine) or in other applications. Where the accumulator hardware logic is part of a convolution engine, the convolution engine may itself be part of a neural network accelerator (NNA). As described in detail below, the accumulator hardware comprises a first addition stage and a second addition stage. The first addition stage takes two input values and performs an addition and the second addition stage takes as one of its inputs, an output directly from the first addition stage, i.e. there is no other hardware logic (e.g. shifting hardware and/or negation logic) between the output from the first addition stage and the input to the second addition stage. The second input to the second addition stage is provided by a feedback path and may be either a zero input or the result of an addition performed in a previous clock cycle. By having the first and second addition stages directly adjacent to each other such that the output from the first addition stage connects directly to the second addition stage, a synthesis tool (which generates the gate-level net-list) can generate a more efficient implementation at gate-level.

Also described herein is improved multiplication hardware that includes the accumulator hardware logic described herein and which calculates a result over more than one clock cycle (e.g. over two clock cycles). The multiplication hardware may be adapted to receive a range of different input bit-widths or may operate on inputs of a pre-defined (and fixed) bit-width.

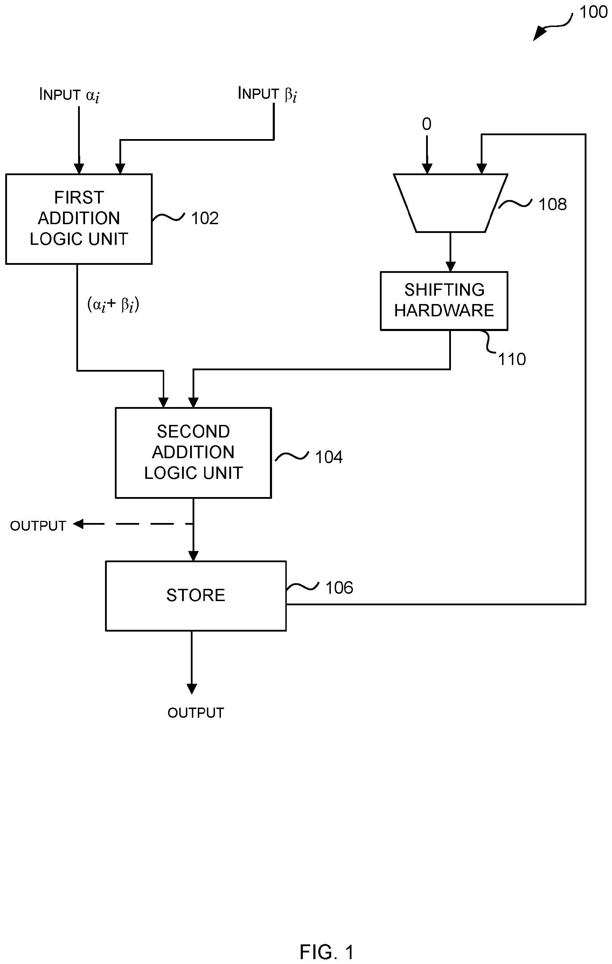

FIG. 1 shows a first example of improved accumulator hardware logic 100. The accumulator hardware logic 100 comprises a first addition logic unit 102 and a second addition logic unit 104, a store 106, selection hardware 108 and shifting hardware 110. The first and second addition logic units 102, 104 each have two inputs and an output and are configured to add the two input values together and output the result. The store 106, which may comprise a plurality of registers, is arranged to store data that is received, and this data can be output, either as an output of the accumulator hardware logic 100 itself, or as an input to another hardware logic element within the accumulator hardware logic 100. The selection hardware 108 has two inputs and is configured to select between the input values received on each of the inputs and to output the selected input value. The selection hardware may, for example, be implemented as a multiplexer. In another example, the selection hardware 108 may be implemented as an arrangement of AND-gates (or equivalent hardware) as one of the inputs that is being selected between is zero. In some examples, the selection hardware 108 may have more than two inputs. The shifting hardware 110 performs bit-shifting by a pre-defined, fixed number of bits in a pre-defined, fixed direction. For example, the shifting hardware 110 may shift the bits input to the shifting hardware 110 by 8 bits to the left.

As shown in FIG. 1, the output from the first addition logic unit 102 is connected directly to one of the inputs of the second addition logic unit 104. The output from the second addition logic unit 104 is stored in the store 106. The selection hardware 108 and shifting hardware 110 form part of a feedback path (which may also be referred to as a feedback loop) from the store 106 to the second input of the second addition logic unit 104. The selection hardware 108 receives, as a first input, data output from the store 106 and the second input of the selection hardware 110 receives an input of all zeros. The output of the selection hardware 108 is connected to the shifting hardware 110 and the output of the shifting hardware 110 is connected to the second input of the second addition logic unit 104.

In operation, the first addition logic unit 102 receives two inputs, denoted $\alpha_i$ and $\beta_i$ and outputs the sum of these two inputs, $\alpha_i+\beta_i$, with i denoting the clock cycle on which the input is received (e.g. i=0 for the first clock cycle, i=1 for the second clock cycle, etc.). In various examples the accumulator may operate over two clock cycles (i=0,1) or over more than two clock cycles. In the first clock cycle (i=0), the first addition logic unit 102 receives as input, two values $\alpha_0$ and $\beta_0$ and outputs the sum of these two inputs, $\alpha_0+\beta_0$, to the second addition logic unit 104. The second addition logic unit 104 also receives a second input from the feedback path that comprises the shifting hardware 110 and the selection hardware 108. As it is the first clock cycle, there is no previous value stored (that relates to this accumulation operation) and so the selection hardware selects the input of zeros and outputs this to shifting hardware 110. Performing shifting on zeros does not affect the value and so output of the shifting hardware 110 that is input to the second addition logic unit 104 is also all zeros. Consequently, the second addition logic unit 104 outputs the result of the sum of $\alpha_0+\beta_0$ and 0 $(\alpha_0+\beta_0+0)$ which is $\alpha_0+\beta_0$. This value is stored in the store 106.

In the second clock cycle (i=1), the first addition logic unit 102 receives as input, two values $\alpha_1$ and $\beta_1$ and outputs the sum of these two inputs, $\alpha_1+\beta_1$, to the second addition logic unit 104. The second addition logic unit 104 also receives a second input from the feedback path that comprises the shifting hardware 110 and the selection hardware 108. As it is the second clock cycle, there is now a previous value stored in the store 106 (that relates to this accumulation operation) and so the selection hardware selects this value, read from the store 106, instead of the input of zeros, and outputs this to the shifting hardware 110. The shifting hardware outputs a shifted version of the value read from the store, denoted $(\alpha_0+\beta_0)\text{<<}s$, where s is the number of bits of shift and in this example the shifting performed is left-shifting, although in other examples, the shift may alternatively be to the right. In an example, s=8. The second addition logic unit 104 receives the shifted, stored value and outputs the result of the sum of $(\alpha_0+\beta_0)\text{<<}s$ and $\alpha_1+\beta_1$ which is $((\alpha_0+\beta_0)\text{<<}s)+(\alpha_1+\beta_1)$. This value is then stored in the store 106. If the accumulation is only over two clock cycles, this value is the output value. Alternatively, the process may be repeated for one or more additional clock cycles (i=2,3,...).

By having the shifting hardware 110 in the feedback path instead of between the first and second addition logic units 102, 104, the shifting operation can be made a fixed, rather than a variable shift and implemented using routing rather than logic elements. This reduces the time taken to perform the shift and the power consumed. Additionally, even if logic elements are used to perform the shifting, any delay associated with performing the shifting is no longer in the critical path. Furthermore, by avoiding having any hardware logic between the two addition logic units 102, 104, the hardware synthesis can be performed more efficiently (i.e. a synthesis tool can generate a more efficient gate-level net-list). Any hardware logic that is present between the two addition logic units reduces the ability of the synthesis tool to optimise the implementation in silicon.

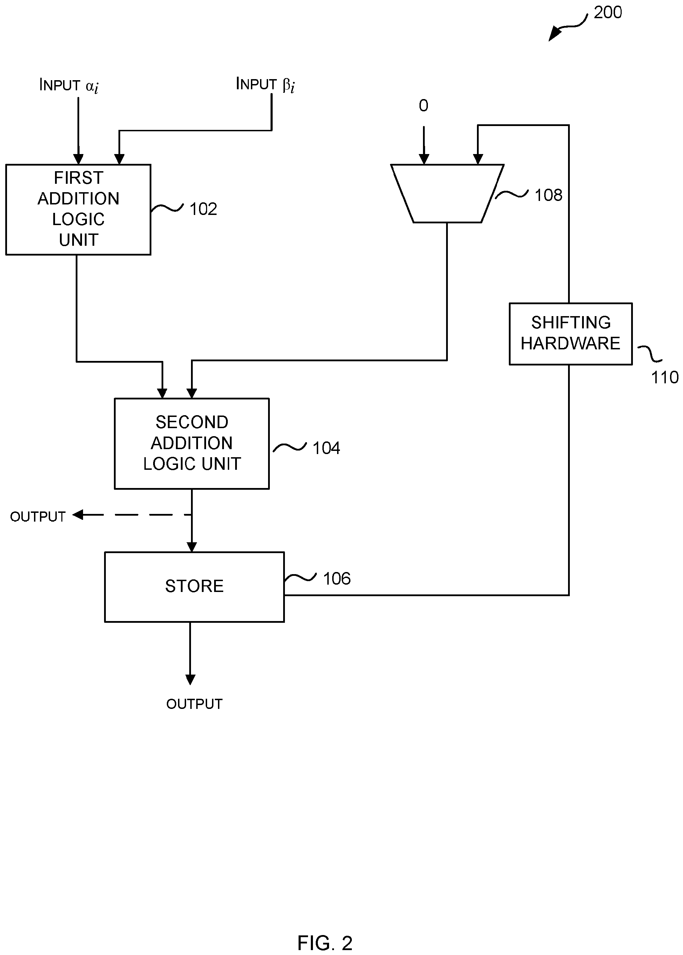

FIG. 2 shows a second example of improved accumulator hardware logic 200 which is a variation of that shown in FIG. 1 and described above. Like, the accumulator hardware logic 100 shown in FIG. 1, the accumulator hardware logic 200 shown in FIG. 2 comprises a first addition logic unit 102 and a second addition logic unit 104, a store 106, a selection hardware 108 and shifting hardware 110. Additionally, like the accumulator hardware logic 100 shown in FIG. 1, the accumulator hardware logic 200 shown in FIG. 2 has the shifting hardware 110 in the feedback path (from the store 106 to the second input of the second addition logic unit 104) and not between the two addition logic units 102, 104. Unlike the accumulator hardware logic 100 shown in FIG. 1, however, the accumulator hardware logic 200 shown in FIG. 2 has the shifting hardware 110 positioned between the store 106 and the selection hardware 108, instead of between the selection hardware 108 and the second input to the second addition logic unit 104. Placing the shifting hardware 110 before the selection hardware 108 (as in FIG. 2) avoids any shifting of zero (e.g. in the first clock cycle of an accumulation operation) and also enables the selection hardware 108 to have additional functionality in some implementations (e.g. it may enable multiplexing of additional inputs in the selection hardware 108).

Aside from the change in position of the shifting hardware 110, the accumulator hardware logic 200 shown in FIG. 2 operates in the same way as the accumulator hardware logic 100 shown in FIG. 1. The same inputs are received by the second addition logic unit 104 in each clock cycle, with the only difference being that the selection hardware 108 selects between the zero input or a shifted version of a data value stored (in store 106) in the previous clock cycle, instead of between the zero input and the unshifted stored value.

Whilst the shifting hardware 110 is shown in FIGs. 1 and 2 as a discrete logic block, it will be appreciated that this shifting may be implemented by the way in which bits are routed from the immediately previous logic element (e.g. the selection hardware 108 or store 106) to the immediately following logic element (e.g. the second addition logic unit 104 or selection hardware 108). This is possible because the shifting that is implemented is fixed (in terms of both number of bit positions and direction) and is not optional (i.e. it is performed on all data it receives in every clock cycle). For example, a bit in position x in the value output by the immediately previous logic element may be routed to an input to the immediately following logic element corresponding to a bit position x+s and hence implement a left shift of s bits through routing alone. In this way, the shifting hardware 110 may be implemented in an efficient manner, i.e. in a manner that does not consume either area or power.

In the examples shown in FIGs. 1 and 2, the data output by the accumulator hardware logic 100, 200 is the output from the second addition logic unit 104 in the last clock cycle (e.g. i=1, where the operation is performed over two clock cycles). This output value may be stored in store 106 before being output (as indicated by the solid arrows in FIGs. 1 and 2) or may be output directly from the second addition logic unit 104 (as indicated by the dotted arrows in FIGs. 1 and 2).

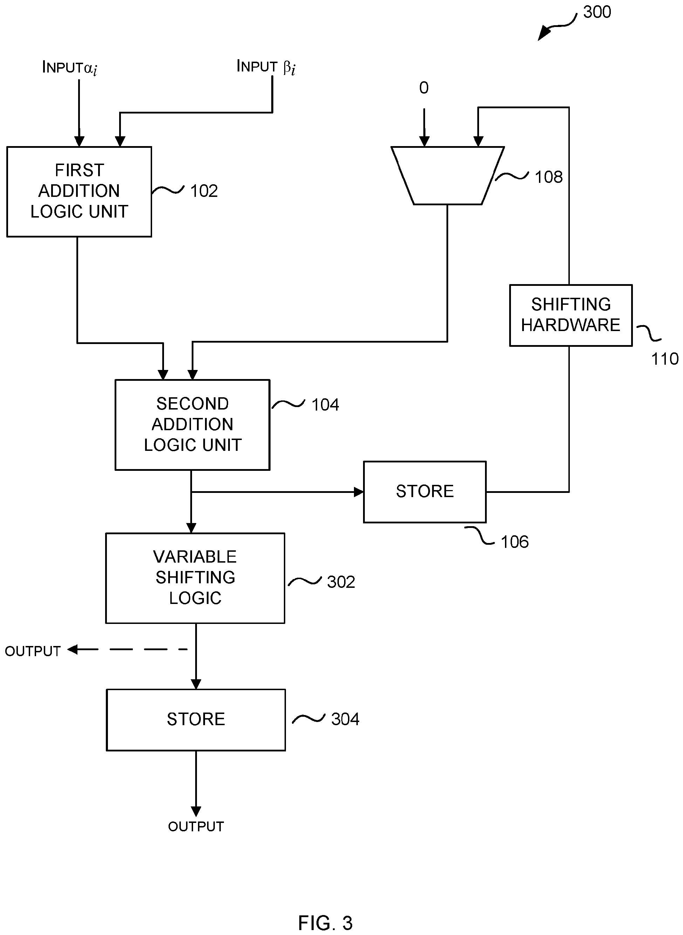

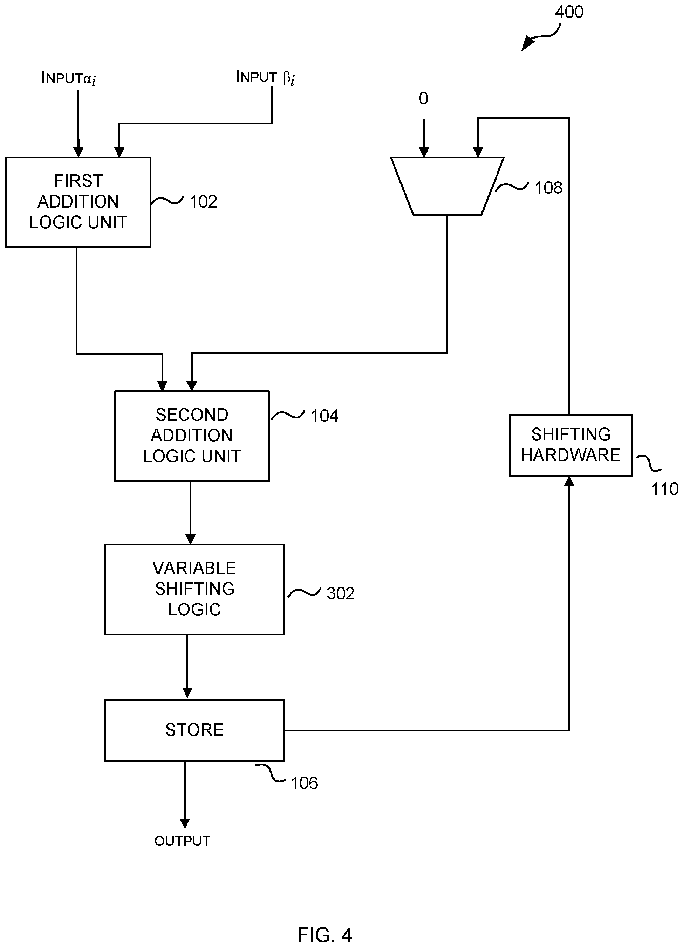

Typically, the accumulator hardware logic 100, 200 is part of a larger logic unit, such as a multiplication hardware unit or a convolution engine, and the next element within the larger logic unit may expect the value output by the accumulator hardware logic 100, 200 to be in a particular form, e.g. left-aligned. Consequently, it may be necessary to apply a shift to the final output value from the second addition logic unit 104 (i.e. the output value from the second addition logic unit 104 in the final clock cycle of the accumulation operation). The amount of shifting that is required to be applied to the output may vary, e.g. based on the number format of the input values and/or the input values themselves. Where the shifting is dependent upon the input values (rather than, or in addition to, the number format) the accumulator hardware logic 100, 200 may comprise a leading zero counter (LZC) that is used to determine the shift that is to be applied to the final output value from the second addition logic unit 104. Alternatively, the accumulator hardware logic 100, 200 may receive a control signal (e.g. from an LZC outside the accumulator hardware logic) that indicates the amount of shifting to be performed on the final output value from the second addition logic unit 104. Shifting based on the input values may, for example, assist with maximising the possible precision of the output result. FIGs. 3 and 4 show two further examples of improved accumulator hardware logic 300, 400. Although these are shown as variations of that shown in FIG. 2, such that the shifting hardware 110 is before the selection hardware 108 rather than after it in the feedback path, in further examples, the shifting hardware 110 may instead be placed after the selection hardware 108 in a similar manner to that shown in the example of FIG. 1.

The example accumulator hardware logic 300 shown in FIG. 3 comprises the same elements as the other examples described above with reference to FIGs. 1 and 2, and additionally comprises variable shifting logic 302 and a second store 304. The variable shifting logic 302 performs bit-shifting by a controllable (and hence variable) amount (i.e. in terms in the number of bit positions), which may be zero (i.e. such that no shifting is performed) and which may be in either direction (i.e. the direction of the shift, like the number of bit positions, is controllable e.g. left-shifting or right-shifting) in order that the value output by the accumulator hardware is in the correct form (e.g. left-aligned). As the shift that is performed is not fixed (i.e. it is controllable and hence variable), it cannot be performed without using logic elements, unlike the shifting element 110 (described above). The accumulator hardware logic 300 operates as described above with reference to FIGs. 1 and 2 and in addition the variable shifting logic 302 receives, as an input, the output value from the second addition logic unit 104 in the final clock cycle of the accumulation operation. The variable shifting logic 302 applies the variable shift to the input value (e.g. dependent upon a control signal or configuration parameter) and outputs the shifted value to the second store 304. As noted above, the control signal, configuration parameter or other signal that is used to control the amount of shifting performed by the variable shifting logic 302 may be dependent upon the number format of the input values and/or the input values themselves. It will be appreciated that the variable shifting logic 302 may receive the output value from the second addition logic unit 104 in cycles other than the final clock cycle of the accumulation operation; however, in these earlier cycles the value is not valid data. In some examples, to conserve power, a valid signal may be used to signal to the variable shifting logic 302 when the received input data is a valid and so conserve power by keeping all signals static from the previous clock cycle in the event that the data is not valid.

It will be appreciated that whilst the accumulator hardware logic 300 shown in FIG. 3 comprises a second store 304 for storing the output value, in variations on the examples shown, this second store 304 may be omitted and the output value may instead be output directly from the variable shifting logic 302 (as indicated by the dotted arrow in FIG. 3).

The example accumulator hardware logic 400 shown in FIG. 4 is similar to that shown in FIG. 3 in that it comprises the same elements as the other examples described above with reference to FIGs. 1 and 2 and additionally comprises variable shifting logic 302; however, it does not comprise the second store 304 present in the example of FIG. 3. In the example of FIG. 4, the variable shifting logic 302 receives, as an input, the output value from the second addition logic unit 104 and applies a variable shift to that value. For each clock cycle except for the final clock cycle of the accumulation operation, the variable shifting logic 302 does not apply a shift (i.e. it applies a shift of zero bit positions) such that the value output from the variable shifting logic 302 and stored in the store 106 is the same as the value output by the second addition logic unit 104. However, in the final cycle of the accumulation operation (e.g. in the second cycle where the accumulation is performed over two clock cycles), the variable shifting logic 302 applies a variable shift to the value received from the second addition logic unit 104 (to place it in the correct form for output) and the shifted value is stored in the store 106.

In an example accumulation over two clock cycles, the first addition logic unit 102 receives two inputs, denoted $\alpha_i$ and $\beta_i$ and outputs the sum of these two inputs, $\alpha_i+\beta_i$, with i denoting the clock cycle (e.g. i=0 for the first clock cycle and i=1 for the second clock cycle). In various examples the accumulator may operate over two clock cycles (i=0,1) or over more than two clock cycles. In the first clock cycle (i=0), the first addition logic unit 102 receives as input, two values $\alpha_0$ and $\beta_0$ and outputs the sum of these two inputs, $\alpha_0+\beta_0$, to the second addition logic unit 104. The second addition logic unit 104 also receives a second input from the feedback path that comprises the shifting hardware 110 and the selection hardware 108. As it is the first clock cycle, there is no previous value stored (that relates to this accumulation operation) and so the selection hardware selects the input of zeros and outputs this to second addition logic unit 104. Consequently, the second addition logic unit 104 outputs the result of the sum of $\alpha_0+\beta_0$ and 0 ($\alpha_0+\beta_0+0$) which is $\alpha_0+\beta_0$. This value is not shifted by the variable shifting logic 302 and is stored in the store 106.

In the second clock cycle (i=1), the first addition logic unit 102 receives as input, two values $\alpha_1$ and $\beta_1$ and outputs the sum of these two inputs, $\alpha_1+\beta_1$, to the second addition logic unit 104. The second addition logic unit 104 also receives a second input from the feedback path that comprises the shifting hardware 110 and the selection hardware 108. As it is the second clock cycle, there is now a previous value stored in the store 106 (that relates to this accumulation operation) and so the selection hardware selects the shifted version of this value, read from the store 106 and shifted by the shifting hardware 110, instead of the input of zeros, and outputs this to the second addition logic unit 104. As described above, the output of the shifting hardware may be denoted $(\alpha_0+\beta_0)<<s$, where s is the number of bits of shift and in this example the shifting performed is left-shifting, although in other examples, the shift may alternatively be to the right. In an example, s=8. The second addition logic unit 104 receives the shifted, stored value and outputs the result of the sum of $(\alpha_0+\beta_0)<<s$ and $\alpha_1+\beta_1$ which is $((\alpha_0+\beta_0)<<s)+(\alpha_1+\beta_1)$. This value is then further shifted by a variable amount in the variable shifting logic 302 before being stored in the store 106. If the shift applied by the variable shifting logic 302 is <<v, where v is the number of bits of shift and this example the shifting performed is left-shifting, then the value that is stored will be $((((\alpha_0+\beta_0)<<s)+(\alpha_1+\beta_1))<<v)$.

The accumulator hardware logic 300, 400 shown in FIGs. 3 and 4 has the same technical benefits as described above with reference to FIGs. 1 and 2. In addition, by positioning the store 106 after the variable shifting logic 302 as shown in FIG. 4 (rather than before, as in FIG. 3), the efficiency of the hardware is further improved. This is because any addition operation needs to be fully resolved before the result can be stored (e.g. in registers) and this means that the final addition operation (the carry-ripple operation which is slower to perform than the earlier carry-save operations) must have completed before storing occurs. It is not necessary, however, for the result to have fully resolved before shifting (by the variable shifting logic 302). This means that there in more time for the addition to resolve in the hardware arrangement of FIG. 4 compared to that shown in FIG. 3 because the second addition logic unit output is input to the variable shifting logic before the result is input to any store and this, in turn, may also increase the options available to the synthesis tool when generating the gate-level net-list.

In a further variation of that shown in FIG. 4, the shifting hardware 110 could be omitted and the fixed shift instead performed by the variable shifting logic 302; however, this may increase the number of different shifting amounts that can be implemented within the variable shifting logic 302 and also results in the shifting being moved back into the critical path, from the feedback path.

Whilst the first and second addition logic units 102, 104, shown in FIGs. 1-4 are described above as performing addition, it will be appreciated that they may perform addition, or instead, perform a subtraction operation. Alternatively, where subtraction of two values is required, the appropriate value may be negated before it is input to the addition logic unit (e.g. to the first addition logic unit 102), so that the addition logic units only perform addition. Furthermore, whilst the first and second addition logics unit 102, 104 shown in FIGs. 1-4 are described as performing addition of two input values, it will be appreciated that either or both units may perform addition (or subtraction) of more than two input values. For example, they may perform addition of as many input values as can be added together (or subtracted) in a single clock cycle.

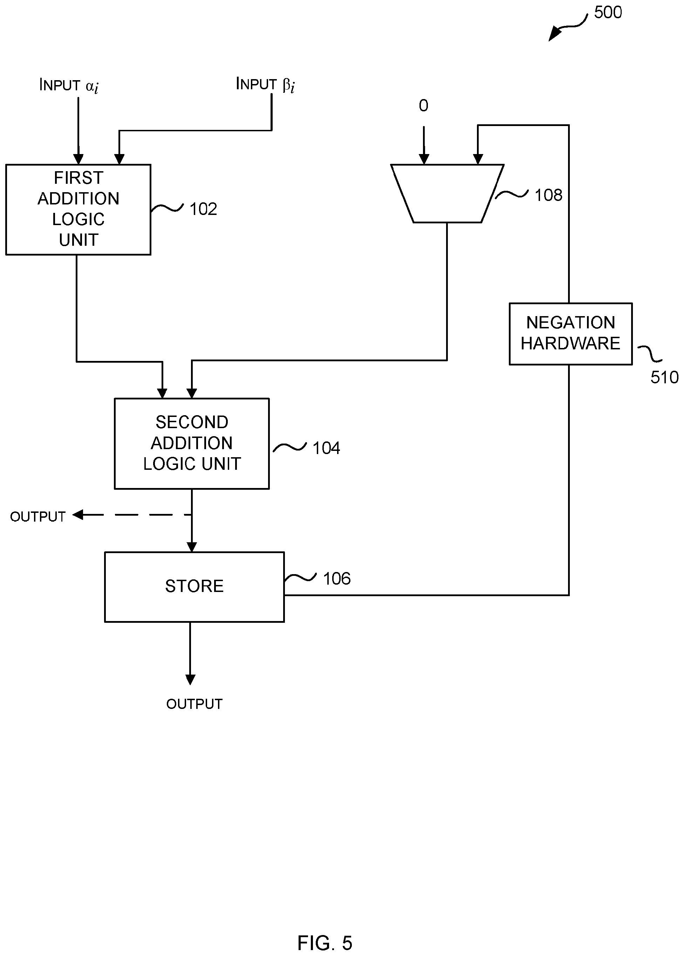

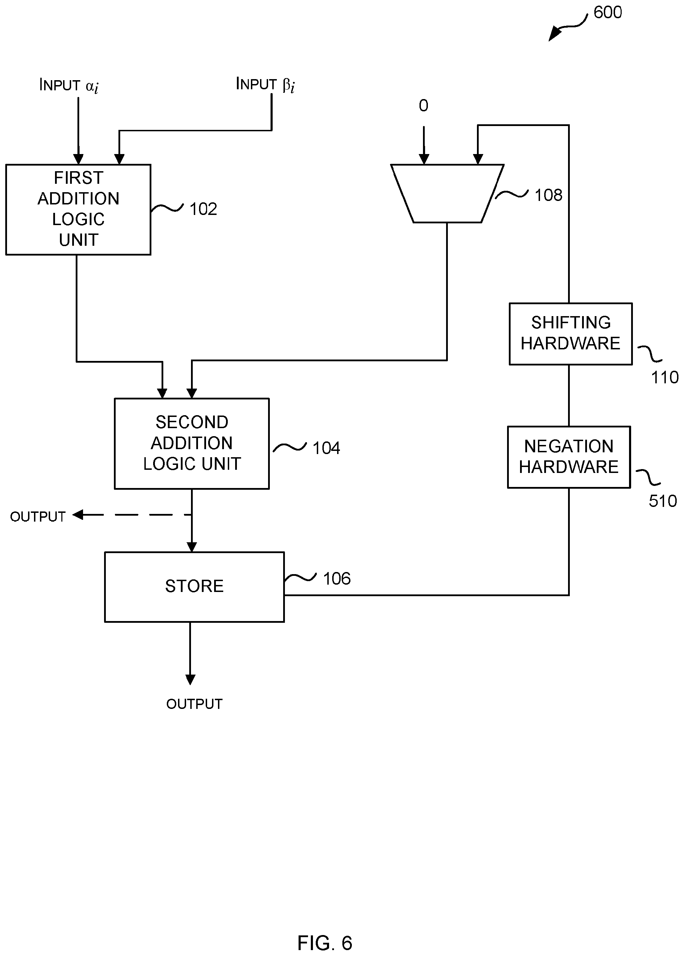

In the examples shown in FIGs. 1-4, the feedback path comprises the shifting hardware 110 that implements a fixed shift (in terms of both number of bits and direction of the shift). In addition, or instead, the feedback path may include negation hardware 510 as in the accumulator hardware logic 500, 600 shown in FIGs. 5 and 6. This may be included in the feedback path to avoid placing it between the first and second addition logic units for the reasons explained above and may, for example, be implemented in order to perform subtraction rather than addition using a second addition logic unit that is configured only to perform addition (and not subtraction). Subtraction may be used, for example, where the input values are signed, e.g. where both inputs $\alpha_0$ and $\beta_0$ are negative. By placing the negation in the feedback path and limiting the second addition logic unit to performing addition only (and not subtraction), it can be more efficiently implemented in hardware (e.g. in terms of area and power). Whilst FIGs. 5 and 6 are shown as variants of FIG. 2, it will be appreciated that the negation hardware 510 may be included in any of FIGs. 1, 3 and 4 instead of, or in addition to, the shifting hardware 110. Furthermore, whilst FIG. 6 shows the negation hardware 510 before the shifting hardware 110 in the feedback path, it will be appreciated that it may alternatively be placed after the shifting hardware 110 in the feedback path. The arrangement of FIG. 5, which includes only negation hardware 510 and not shifting hardware 110, may, for example, be used when summing aligned signed numbers.

The improved accumulator hardware logic described herein may be implemented as part of multiplication hardware that is arranged to calculate a result over more than one clock cycle (e.g. over two clock cycles). Two clock cycles may be used to reduce the hardware requirements (in terms of area and power consumption) whilst reducing the performance, i.e. the multiplication takes two clock cycles rather than one. The multiplication of two input numbers, which may, for example be an input value $I$ and a weight $W$ (e.g. where the multiplication is part of a convolution operation) may be split over two cycles by splitting each of the input numbers into two parts, a first part ($I_{high}$, $W_{high}$ respectively) comprising a first number of consecutive MSBs (most significant bits) and a second part ($I_{low}$, $W_{low}$ respectively) comprising the remaining LSBs (least significant bits) such that:

$$I \cdot W = \left(\left(I_{high} \cdot W_{high}\right) \ll 2s\right) + \left(\left(I_{high} \cdot W_{low}\right) \ll s\right) + \left(\left(I_{low} \cdot W_{high}\right) \ll s\right) + \left(I_{low} \cdot W_{low}\right)$$

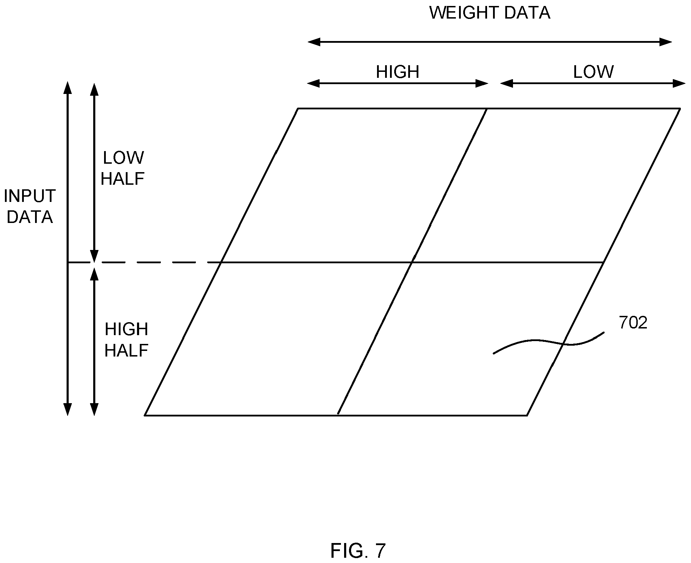

where s is the number of bits in each of the second (low) parts. This is shown graphically in FIG. 7 with each of the quadrants 702 representing one of the four multiplication terms ($I_{high} \cdot W_{high}$), ($I_{high} \cdot w_{low}$), ($I_{low} \cdot W_{high}$) and ($I_{low} \cdot W_{low}$).

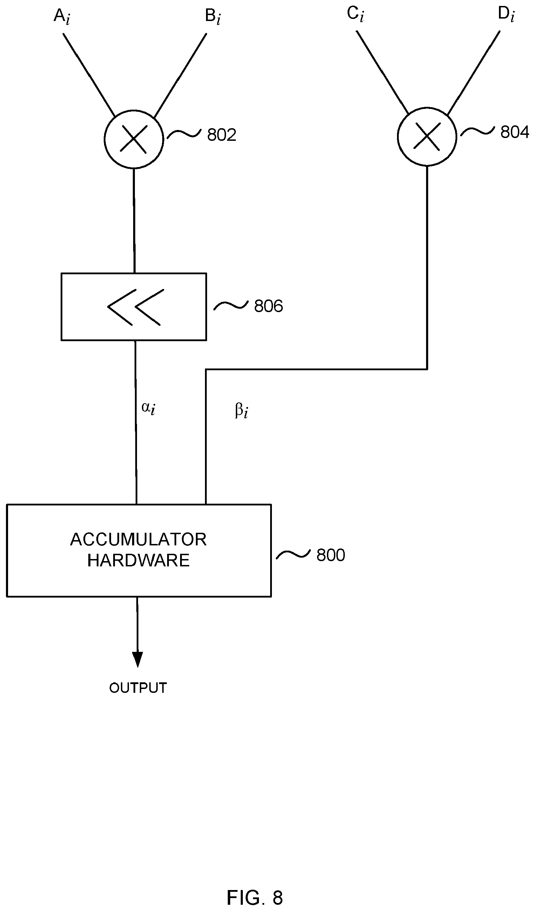

In the first clock cycle two of the four multiplication terms are calculated (the first of the multiplication terms above and either the second or third multiplication terms) and added together in the accumulator hardware logic and in the second clock cycle, the remaining two multiplication terms are calculated (the last of the multiplication terms above and the other multiplication term that was not calculated in the first clock cycle), added together and added to the result generated in the first clock cycle. An example of the multiplication hardware is shown in FIG. 8 and comprises accumulator hardware 800, two multipliers 802, 804 and left-shifting hardware 806. Each of the multipliers 802, 804 receives two input values (as shown in FIG. 8: inputs $A_i$ & $B_i$ for the first multiplier 802, and inputs $C_i$ & $D_i$ for the second multiplier 804) and multiplies them together. The output from the first multiplier 802 is input into the left-shifting hardware 806 and undergoes left-shifting. The output from the left-shifting hardware 806 is input to the accumulator hardware logic 800 and corresponds to input $\alpha_i$ in the explanation of FIGs. 1-6 above, and the output from the second multiplier 804 (which is not left-shifted) is also input to the accumulator hardware logic 800 and corresponds to input $\beta_i$. The accumulator hardware logic 800 may correspond to any of the examples described above (e.g. those shown in any of FIGs. 1-6 or any other variations described above).

The left-shifting hardware 806 performs a left-shift by a fixed number, s, of bit positions on a value input to it. This value s is the number of bits in the second (low) part of each input number. For example, if the input numbers, $I$ and $W$, are both 16-bit numbers, they may each be split into two 8-bit parts (a high part and a low part) and the left-shifting hardware 806 may shift the value input to it by 8 bit positions to the left (e.g. s=8). The shifting hardware 110 in the accumulator hardware logic 800 implements a fixed shift that is the same as the left-shifting hardware 806 (e.g. 8 bit positions to the left in the example above).

The inputs to the multiplication hardware shown in FIG. 8 in each of the two clock cycles are as shown in the table below:

| TABLE 1 | 1st clock cycle (i=0) | 2nd clock cycle (i=1) |
|---|---|---|
| $A_i$ and $B_i$ | $I_{high}$ and $W_{high}$ | The other of: <br> $I_{high}$ and $W_{low}$ <br> and <br> $I_{low}$ and $W_{high}$ |
| $C_i$ and $D_i$ | One of: <br> $I_{high}$ and $W_{low}$ <br> and <br> $I_{low}$ and $W_{high}$ | $I_{low}$ and $W_{low}$ |

As shown in the table, in the first clock cycle, the two inputs to the first multiplier 802 that inputs to the left-shifting hardware 806 are the two high parts of the two original input values and the two inputs to the second multiplier 804 are the high part of one of the two original input values and the low part of the other original input value. In the second clock cycle, the two inputs to the second multiplier 804 that does not connect to the left-shifting hardware 806 are the two low parts of the two original input values and the two inputs to the first multiplier 802 are the remaining pair of input parts, one of which is a high part of an original input value and the other is a low part of the other original input value.

This means that:

$$\alpha_0 = \left(\left(I_{high} \cdot W_{high}\right) \ll s\right)$$

$$\beta_0 = \left(I_{high} \cdot W_{low}\right) \; or \; \left(I_{low} \cdot W_{high}\right)$$

$$\alpha_1 = \left(\left(I_{low} \cdot W_{high}\right) \ll s\right) or \left(\left(I_{high} \cdot W_{low}\right) \ll s\right)$$

$$\beta_1 = \left(I_{low} \cdot W_{low}\right)$$

Referring back to the description of the accumulator hardware logic 800 above, in the first clock cycle it calculates:

$$\alpha_0 + \beta_0 = \left(\left(I_{high} \cdot W_{high}\right) \ll s\right) + \left(I_{high} \cdot W_{low}\right)$$

and in the second clock cycle it calculates:

$$\left(\left(\alpha_0 + \beta_0\right) \ll s\right) + \left(\alpha_1 + \beta_1\right)$$

$$= \left(\left(\left(\left(I_{high} \cdot W_{high}\right) \ll s\right) + \left(I_{high} \cdot W_{low}\right)\right) \ll s\right) + \left(\left(\left(I_{low} \cdot W_{high}\right) \ll s\right) + \left(I_{low} \cdot W_{low}\right)\right)$$

$$= \left(\left(I_{high} \cdot W_{high}\right) \ll 2s\right) + \left(\left(I_{high} \cdot W_{low}\right) \ll s\right) + \left(\left(I_{low} \cdot W_{high}\right) \ll s\right)$$
$$+ \left(I_{low} \cdot W_{low}\right)$$

Hardware similar to the multiplication hardware described above (and shown in FIG. 8) may be used within a convolution engine. Within a convolution engine, a plurality of multiplications of an input value and its corresponding weight are performed in parallel and summed together. The convolution engine may calculate:

$$\sum_{n=1}^{N} I_n \cdot W_n$$

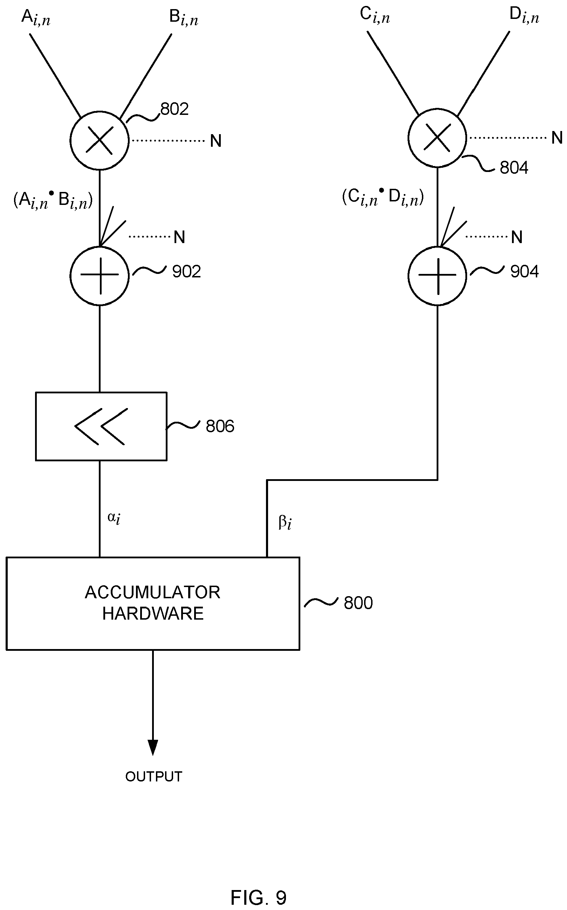

N is a configurable parameter and in examples, N=64, 128, etc. Example convolution hardware is shown in FIG. 9 and it comprises N first multipliers and N second multipliers so that N instances of the multiplication described above with reference to FIG. 8 can be performed in parallel. The $n^{th}$ first multiplier 802 (where n=1,...,N) calculates $A_{i,n} \cdot B_{i,n}$ and the $n^{th}$ second multiplier 804 calculates $C_{i,n} \cdot D_{i,n}$. The convolution hardware also comprises a first addition logic element 902 that sums the outputs from each of the first multipliers 802 and a second addition logic element 904 that sums the outputs from each of the second multipliers 804. The output of the first addition logic element 902 is left shifted by s bit positions in a left-shifting hardware 806 and then input to the accumulator hardware logic 800 and corresponds to input $\alpha_i$ in the explanation of FIGs. 1-6 above. The output of the second addition logic element 904 (which is not left-shifted) is also input to the accumulator hardware logic 800 and corresponds to input $\beta_i$. The accumulator hardware logic 800 may correspond to any of the examples described above (e.g. those shown in any of FIGs. 1-6 or any other variations described above).

As described above with reference to FIG. 8, the left-shifting hardware 806 performs a left-shift by a fixed number, s, of bit position on a value input to it. This value s is the number of bits in the second (low) part of each input number. For example, if the input numbers, *I* and *W,* are both 16-bit numbers, they may each be split into two 8-bit parts (a high part and a low part) and the left-shifting hardware 806 may shift the value input to it by 8 bit positions to the left (e.g. s=8). The shifting hardware 110 in the accumulator hardware logic 800 implements a fixed shift that is the same as the left-shifting hardware 806 (e.g. 8 bit positions to the left in the example above). In a variation of that shown in FIG. 9, the left-shifting hardware 806 may be positioned before, rather than after, the first addition logic element 902. However, if the left-shifting is performed before summing the N multiplication results, the hardware would need to include N left-shifting hardware 806. As the shift may be implemented by routing (because it is fixed), rather than being implemented in logic elements, this does not increase the overall size of the hardware.

The inputs to the $n^{th}$ first and second multipliers 802, 804 in the hardware shown in FIG. 9 in each of the two clock cycles are as shown in the table below:

| TABLE 2 | 1st clock cycle (i=0) | 2nd clock cycle (i=1) |
|---|---|---|
| $A_{i,n}$ and $B_{i,n}$ | $I_{high,n}$ and $W_{high,n}$ | The other of: <br> $I_{high,n}$ and $W_{low,n}$ <br> and <br> $I_{low,n}$ and $W_{high,n}$ |
| $C_{i,n}$ and $D_{i,n}$ | One of: <br> $I_{high,n}$ and $W_{low,n}$ <br> and <br> $I_{low,n}$ and $W_{high,n}$ | $I_{low}$ and $W_{low}$ |

This means that:

$$\alpha_0 = \left(\left(\sum_{n=1}^{N}\left(I_{high,n} \cdot W_{high,n}\right)\right) \ll s\right)$$

$$\beta_0 = \sum_{n=1}^{N}\left(I_{high} \cdot W_{low}\right) \; or \; \sum_{n=1}^{N}\left(I_{low} \cdot W_{high}\right)$$

$$\alpha_1 = \left(\left(\sum_{n=1}^{N}\left(I_{low} \cdot W_{high}\right)\right) \ll s\right) or \left(\left(\sum_{n=1}^{N}\left(I_{high} \cdot W_{low}\right)\right) \ll s\right)$$

$$\beta_1 = \sum_{n=1}^{N}\left(I_{low} \cdot W_{low}\right)$$

Referring back to the description of the accumulator hardware logic 800 above, in the first clock cycle it calculates:

$$\alpha_0 + \beta_0$$

and in the second clock cycle it calculates:

$$\left(\left(\alpha_0 + \beta_0\right) \ll s\right) + \left(\alpha_1 + \beta_1\right)$$

$$= \left(\left(\sum_{n=1}^{N}\left(I_{high} \cdot W_{high}\right)\right) \ll 2s\right) + \left(\left(\sum_{n=1}^{N}\left(I_{high} \cdot W_{low}\right)\right) \ll s\right) + \left(\left(\sum_{n=1}^{N}\left(I_{low} \cdot W_{high}\right)\right) \ll s\right)$$

$$+ \sum_{n=1}^{N}\left(I_{low} \cdot W_{low}\right)$$

Whilst the multiplication hardware of FIG. 8 and the convolution hardware of FIG. 9 are described above as calculating a result over more than one clock cycle by splitting each of the input values into two parts, in a variation on that described above, the hardware may be adapted to receive a range of different input bit-widths up to a maximum bit-width, $b_{max}$. Dependent upon the bit-width of the input value, the input value may be padded with zeros to increase its bit-width or it may not be split into two parts and various examples are described below.

If the bit-width of one of the inputs does not exceed the fixed bit shift (i.e. the bit-width does not exceed s), but the other input value does have a bit-width that exceeds the fixed bit shift, then only the input value with the larger bit-width may be split into two. This reduces the calculations such that they can be performed over a single clock cycle. For example, if input I has a bit-width that does not exceed s and input W has a larger bit-width then the calculation becomes:

$$I \cdot W = \left(\left(I \cdot W_{high}\right) \ll s\right) + \left(I \cdot W_{low}\right)$$

If, however, both input values have bit-widths that do not exceed s, then neither may be split into two and the calculation is:

$$I \cdot W$$

This means that in the situation where both of the input values have a bit-width that does not exceed s, then no shifting is required and so the left-shifting hardware 806 may be arranged to perform either a left-shift by a fixed number, s, of bit positions on a value input to it or not to perform any shift at all. In other words, the left-shifting hardware 806 may be arranged to perform a variable left-shift shift of either zero or s bits.

Furthermore, where the input bit-width of the original input values, I and W, is not $b_{max}$ or s, the input values may be mapped onto values which have a bit-width of either $b_{max}$ or s and the lowest bits padded with zeros so that the resultant bit-width, after padding, is either $b_{max}$ or s. For example, if the bit-width of an input value is 12, with $b_{max} = 16$ and s=8, the input value may be mapped to a 16-bit value by appending four zeros as LSBs. Similarly, if the bit-width of an input value is 4, with $b_{max} = 16$ and s=8, the input value may be mapped to an 8-bit value by appending four zeros as LSBs. Depending upon the amount of padding, this may result in the low part of the input value (if it is split in two after being padded) being all zeros. In this case, the calculations are reduced as described above such that they can be performed in a single clock cycle.

Such variable mode hardware, which can accommodate input values of different bit-widths may therefore calculate a result over a single clock cycle for some bit widths of input values (i.e. where at least one of the pair of input values has a bit-width that is less than or equal to s) and may calculate a result over more than one clock cycle for other, larger, bit widths (i.e. where both of the input values have a bit-width larger than s). Where the result is calculated over a single clock cycle, the accumulator hardware 800 does not perform any accumulation, where accumulation is defined as iterative summing over time using a register (i.e. there is only a single clock cycle per operation, i=0).

By enabling the hardware to receive input values of different bit-widths, the efficiency of the hardware improved. The overall size and power consumption of the hardware can be reduced because it is not necessary to provide hardware logic that can perform multiplication at the largest bit-width of all possible input values, $b_{max}$, in a single clock cycle. Also, for bit-widths that do not exceed the threshold, s, the multiplication can be performed in a single clock cycle with the throughput only being reduced for those input values with bit-widths that exceed the threshold, s. Furthermore, the hardware may be configured to perform two convolutions at the same time (e.g. a first using inputs $A_{i,n}$ and $B_{i,n}$ and a second using inputs $C_{i,n}$ and $D_{i,n}$ where all of the input values have bit-widths that do not exceed the threshold, s) in order to fully utilise the 2N multipliers 802, 804.

The inputs values (I,W) may be signed or unsigned values. Where they are signed values, the two first, high, parts may be treated as signed (as they will include the sign-bit) and the signs taken into consideration when performing the multiplication (e.g. by negating values and/or performing subtractions rather than additions, where necessary) and the two second, low, parts may be treated as unsigned values. For example, given an x-bit signed two's complement number, then the most significant digit (the sign bit) has a weight of $-2^{x-1}$ (i.e. negative) and the rest of the bit having positive weights, so that they can be treated as unsigned.

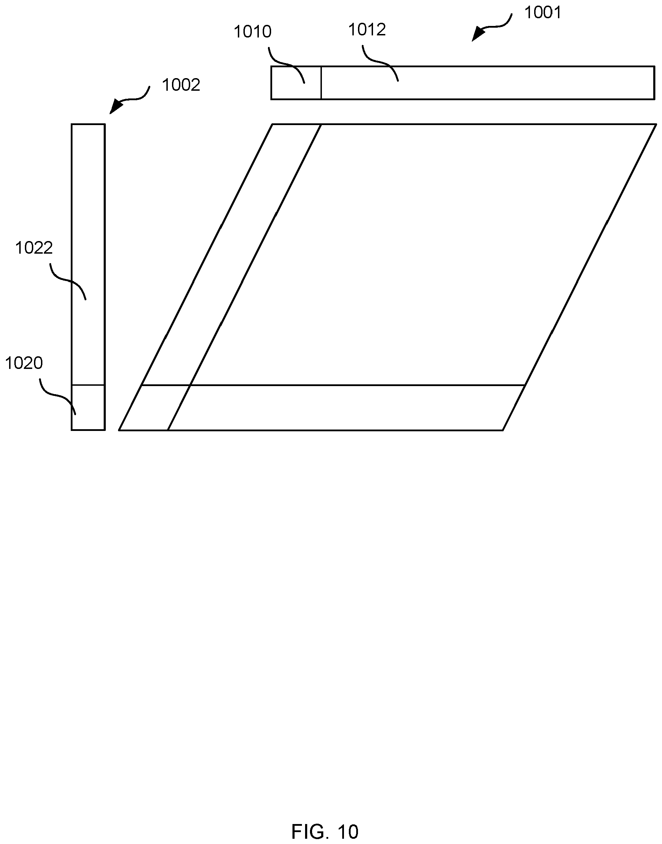

In the example shown graphically in FIG. 7, the input values are split into two parts of equal length (in terms of number of bits), or into two parts of approximately equal length. For example, a 16-bit input may be split into a first, high, part comprising 8 MSBs and a second, low, part comprising the remaining 8 LSBs. In other examples, the input values may be split into two parts of different sizes, and this is shown graphically in FIG. 10. In this example, each input value 1001, 1002 is split into a first, high, part 1010, 1020 comprising a single MSB, which may be the sign bit, and a second, low, part 1012, 1022 comprising all the remaining bits.

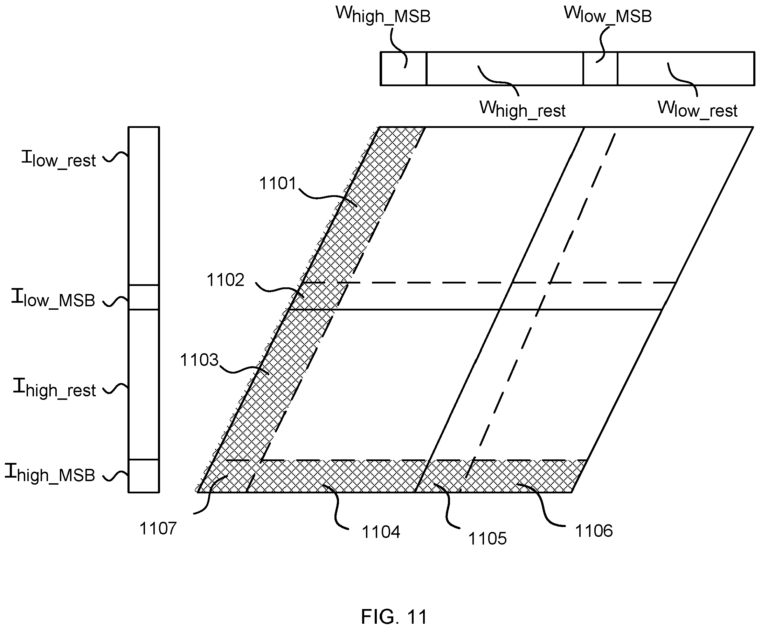

In a further example, the arrangement shown in FIG. 10 may be applied to each of the quadrants 702 in FIG. 7, to further breakdown the multiplication into smaller parts. This may, for example, be used where the input data is signed, rather than unsigned, data (i.e. both input values are signed). This is shown graphically in FIG. 11. Each $b_{max}$-bit input value is split in half, with a first, high, part ($I_{high}$, $W_{high}$) comprising the $b_{max}/2$ MSBs and the second, low, part ($I_{low}$, $W_{low}$) comprising the remaining $b_{max}/2$ LSBs. Each part is then split into a first, high, sub-part ($I_{high\_MSB}$, $W_{high\_MSB}$, $I_{low\_MSB}$, $W_{low\_MSB}$) comprising a single MSB and a second, low, sub-part ($I_{high\_rest}$, $W_{high\_rest}$, $I_{low\_rest}$, $W_{low\_rest}$) comprising the remaining ($b_{max}/2$)-1 bits. If the original $b_{max}$-bit input value is a signed value, this means that the first, high, sub-part of the first, high, part ($I_{high\_MSB}$, $W_{high\_MSB}$) comprises the sign bit and the remaining sub-parts ($I_{high\_rest}$, $W_{high\_rest}$, $I_{low\_MSB}$, $W_{low\_MSB}$, $I_{low\_rest}$, $W_{low\_rest}$) can be treated as unsigned values.

This breaks a $b_{max}$x$b_{max}$ bit multiplication (where, for example, $b_{max}$=16) into sixteen smaller multiplication operations and for two signed inputs, seven need to consider whether the input values are signed or unsigned (those shown as shaded in FIG. 11, 1101-1107) and the remaining nine can always be treated as unsigned (and hence positive). Where both the $b_{max}$-bit input values (I,W) are signed and only one of the two input values is negative, the result of the multiplication in the six multiplication operations 1101-1106, is negated before the results are summed. Where only one of the two inputs is signed, then there are four multiplications that could produce a negative result, either 1101, 1102, 1103, 1107 or 1106, 1105, 1104, 1107.

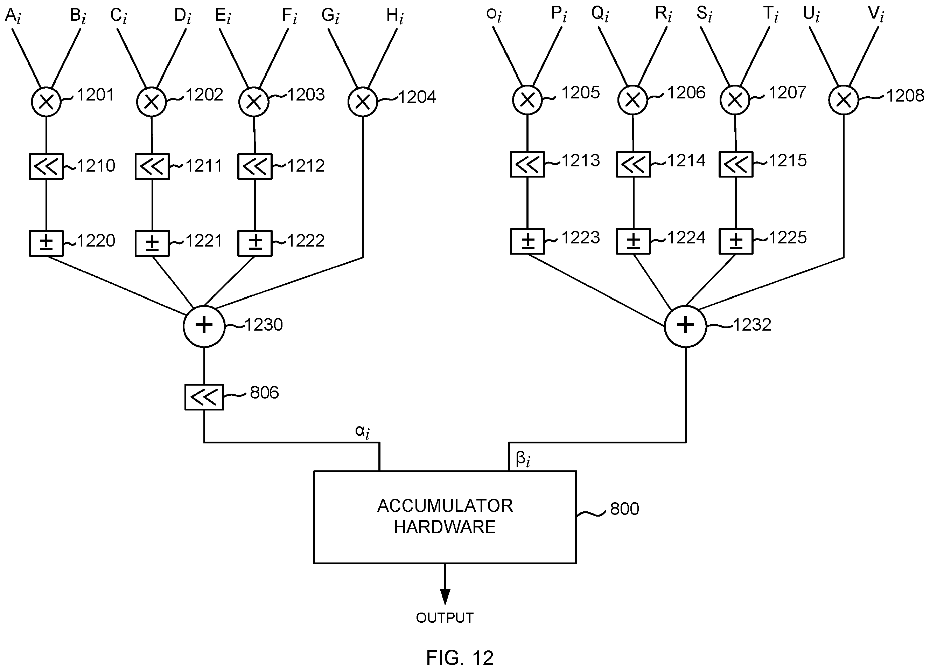

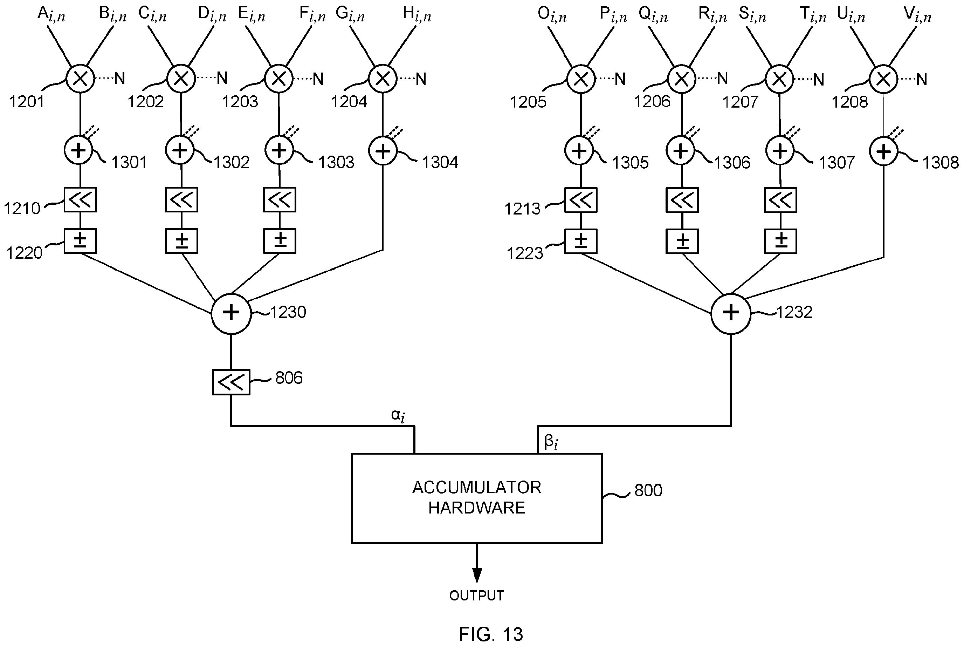

FIGs. 12 and 13 are variations on the hardware shown in FIGs. 8 and 9 respectively in which the ($b_{max}/2$)×($b_{max}/2$) multiplications have been segmented as shown in FIG. 11. This means that instead of having two inputs to perform a ($b_{max}/2$)×($b_{max}/2$) multiplication (e.g. $A_i$ and $B_i$, or $C_i$ and $D_i$ in the examples of FIGs. 8 and 9), there are now eight inputs for each ($b_{max}/2$)×($b_{max}/2$) multiplication ($A_i$-$H_i$ and $O_i$-$V_i$), resulting in 16 inputs per clock cycle and these inputs may be as shown in one of the tables below.

| TABLE 3 | 1st clock cycle (i=0) | 2nd clock cycle (i=1) |
|---|---|---|
| $A_i$ and $B_i$ | $I_{high\_MSB}$ and $W_{high\_MSB}$ | $I_{low\_MSB}$ and $W_{high\_MSB}$ |
| $C_i$ and $D_i$ | One of:<br>$I_{high\text{-}MSB}$ and $W_{high\_rest}$<br>and<br>$I_{high\_rest}$ and $W_{high\_MSB}$ | One of:<br>$I_{low\_MSB}$ and $W_{high\_rest}$<br>and<br>$I_{low\_rest}$ and $W_{high\_MSB}$ |

(continued)

| TABLE 3 | 1st clock cycle (i=0) | 2nd clock cycle (i=1) |
|---|---|---|
| $E_i$ and $F_i$ | The other of:<br>$I_{high\_MSB}$ and $W_{high\_rest}$<br>and<br>$I_{high\_rest}$ and $W_{high\_MSB}$ | The other of:<br>$I_{low\_MSB}$ and $W_{high\_rest}$<br>and<br>$I_{low\_rest}$ and $W_{high\_MSB}$ |
| $G_i$ and $H_i$ | $I_{high\_rest}$ and $W_{high\_rest}$ | $I_{low\_rest}$ and $W_{high\_rest}$ |
| $O_i$ and $P_i$ | $I_{high\_MSB}$ and $W_{low\_MSB}$ | $I_{low\_MSB}$ and $W_{low\_MSB}$ |
| $Q_i$ and $R_i$ | One of:<br>$I_{high\_MSB}$ and $W_{low\_rest}$<br>and<br>$I_{high\_rest}$ and $W_{low\_MSB}$ | One of:<br>$I_{low\_MSB}$ and $W_{low\_rest}$<br>and<br>$I_{low\_rest}$ and $W_{low\_MSB}$ |
| $S_i$ and $T_i$ | The other of:<br>$I_{high\_MSB}$ and $W_{low\_rest}$<br>and<br>$I_{high\_rest}$ and $W_{low\_MSB}$ | The other of:<br>$I_{low\_MSB}$ and $W_{low\_rest}$<br>and<br>$I_{low\_rest}$ and $W_{low\_MSB}$ |
| $U_i$ and $V_i$ | $I_{high\_rest}$ and $W_{low\_rest}$ | $I_{low\_rest}$ and $W_{low\_rest}$ |

| TABLE 4 | 1st clock cycle (i=0) | 2nd clock cycle (i=1) |
|---|---|---|
| $A_i$ and $B_i$ | $I_{high\_MSB}$ and $W_{high\_MSB}$ | $I_{high\_MSB}$ and $W_{low\_MSB}$ |
| $C_i$ and $D_i$ | One of:<br>$I_{high\_MSB}$ and $W_{high\_rest}$<br>and<br>$I_{high\_rest}$ and $W_{high\_MSB}$ | One of:<br>$I_{high\_MSB}$ and $W_{low\_rest}$<br>and<br>$I_{high\_rest}$ and $W_{low\_MSB}$ |
| $E_i$ and $F_i$ | The other of:<br>$I_{high\_MSB}$ and $W_{high\_rest}$<br>and<br>$I_{high\_rest}$ and $W_{high\_MSB}$ | The other of:<br>$I_{high\_MSB}$ and $W_{low\_rest}$<br>and<br>$I_{high\_rest}$ and $W_{low\_MSB}$ |
| $G_i$ and $H_i$ | $I_{high\_rest}$ and $W_{high\_rest}$ | $I_{high\_rest}$ and $W_{low\_rest}$ |
| $O_i$ and $P_i$ | $I_{low\_MSB}$ and $W_{high\_MSB}$ | $I_{low\_MSB}$ and $W_{low\_MSB}$ |
| $Q_i$ and $R_i$ | One of:<br>$I_{low\_MSB}$ and $W_{high\_rest}$<br>and<br>$I_{low\_rest}$ and $W_{high\_MSB}$ | One of:<br>$I_{low\_MSB}$ and $W_{low\_rest}$<br>and<br>$I_{low\_rest}$ and $W_{low\_MSB}$ |
| $S_i$ and $T_i$ | The other of:<br>$I_{low\_MSB}$ and $W_{high\_rest}$<br>and<br>$I_{low\_rest}$ and $W_{high\_MSB}$ | The other of:<br>$I_{low\_MSB}$ and $W_{low\_rest}$<br>and<br>$I_{low\_rest}$ and $W_{low\_MSB}$ |
| $U_i$ and $V_i$ | $I_{low\_rest}$ and $W_{high\_rest}$ | $I_{low\_rest}$ and $W_{low\_rest}$ |

This means that in the example shown in FIG. 12 there are 8 multipliers in total, 1201-1208. Inputs $A_i$ and $B_i$ and inputs $O_i$ and $P_i$ are always 1-bit inputs, so two of the multipliers 1201, 1205 perform a 1x1 multiplication. Inputs $G_i$ and $H_i$ and $U_i$ and $V_i$ are always $((b_{max}/2)-1)$-bit inputs, so two of the multipliers 1204, 1208 perform the largest multiplication, a $((b_{max}/2)-1) \times ((b_{max}/2)-1)$ multiplication (e.g. a 7x7 multiplication if $b_{max}=16$). The remaining multipliers, 1202, 1203, 1206, 1207 receive as input one 1-bit input and one $((b_{max}/2)-1)$-bit input and hence perform a $1 \times ((b_{max}/2)-1)$ multiplication.

The outputs from all except for the largest multipliers 1204, 1208 are input to left-shifting hardware 1210-1215. The result of multiplying inputs $A_i$ and $B_i$ and inputs $O_i$ and $P_i$ are shifted by $2\times(((b_{max}/2)-1))$ bits (in left-shifting hardware 1220, 1223), i.e. by twice the bit-width of the inputs to the largest multiplication. The remaining left-shifts are all by $((b_{max}/2)-1)$ bits (in left-shifting hardware 1221, 1222, 1224, 1225), i.e. by the bit-width of the inputs to the largest multiplication. So if $b_{max}=16$, left-shifting hardware 1220, 1223 perform a left-shift by 14 bits and the other left-shifting hardware 1221, 1222, 1224, 1225 performs a left-shift by 7 bits.

The left-shifted results from all except the largest multipliers 1204, 1208 are then input to negation hardware 1220-1225 which applies an optional negation to the result dependent upon whether the inputs are signed or not and if they are signed, whether the multiplication being performed corresponds to one of the shaded portions 1101-1106 in FIG. 11 and whether the result of the multiplication is negative (as described above). All the results for a particular group of 8 inputs (which correspond to all the bits from one of the four quadrants 702 in FIG. 7) are then added together in addition logic 1230, 1232. The remainder of the hardware then resembles and operates like that shown in FIG. 8 (as described above). It will be appreciated that for some combinations of input formats there may be some pairs of inputs that when multiplied together will always be positive and so depending upon the range of input formats that can be accommodated by the hardware, some of the negation hardware 1220-1225 shown in FIG. 12 may be omitted.

The example shown in FIG. 13 is a variation on that shown in FIG. 9 and described above. It operates in the same way as the hardware shown in FIG. 12 except that in each clock cycle there are now 16xN inputs and so there are 8xN multipliers. As in FIG. 9, the results from each group of N multipliers are summed together in addition logic 1301-1308 and then the hardware proceeds to resemble and operate like that shown in FIG. 12 (as described above).

It will be appreciated that in a further variation of the hardware shown in FIGs. 12 and 13 and described above, the accumulator hardware may not use the improved accumulator hardware described herein (e.g. as shown in FIGs. 1-6) and instead may use alternative accumulator hardware (e.g. conventional accumulator hardware).

Whilst most of the examples described herein relate to performing multiplication, and hence accumulation over two clock cycles (i=0,1), in other examples, the multiplication may be performed over more than two clock cycles (e.g. 4 clock cycles). This may enable the input values to be recursively broken down into smaller pieces (e.g. $b_{max}/4$) and further reduce the size of the multiplication hardware at the expense of reduced throughput for input values with larger bit-widths.

It will be appreciated that reference to the two input values being an input value, I and a weight, W, is by way of example only. Where the hardware described above is not used for convolution operations, the second input, W, may not be a weight but may be any input value.

As described above, using one or more of the techniques described above, the hardware can be implemented more efficiently in terms of area and power. The trade off may be in terms of throughput because for input values with larger bit-widths, the number of clock cycles used to perform the operation is increased. There are many applications where reducing the size of the hardware and the power consumed by the hardware is particularly important, e.g. in battery-powered devices, compact devices (e.g. handheld devices), etc.

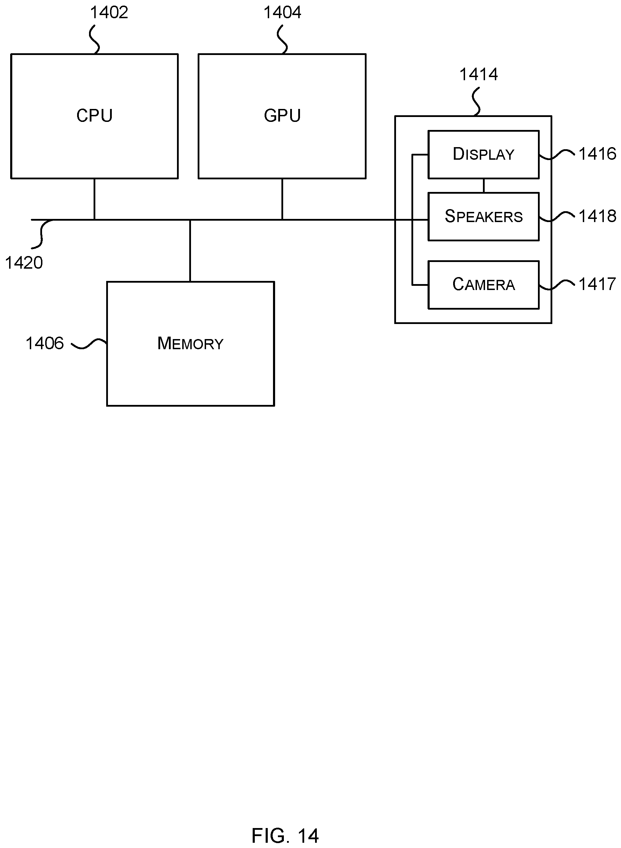

FIG. 14 shows a computer system in which the methods described herein may be implemented and in which the hardware described above may be implemented. The computer system comprises a CPU 1402, a GPU 1404, a memory 1406 and other devices 1414, such as a display 1416, speakers 1418 and a camera 1417. The components of the computer system can communicate with each other via a communications bus 1420. The accumulator hardware described herein may, for example, be implemented within the CPU 1402, GPU 1404 or within a separate NNA block (not shown in FIG. 14).

The accumulator hardware of FIGs. 1-6, multiplication hardware of FIGs. 8 and 12 and the convolution hardware of FIGs. 9 and 13 are shown as comprising a number of functional blocks. This is schematic only and is not intended to define a strict division between different logic elements of such entities. Each functional block may be provided in any suitable manner. It is to be understood that intermediate values described herein as being formed by an element within the hardware need not be physically generated by the hardware at any point and may merely represent logical values which conveniently describe the processing performed by the hardware between its input and output.

The accumulator hardware, multiplication hardware and convolution hardware described herein may be embodied in hardware on an integrated circuit. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, media processor, an application-specific integrated circuit (ASIC), a programmable logic array, a field-programmable gate array (FPGA), physics processing units (PPUs), radio processing units (RPUs), digital signal processors (DSPs), general purpose processors (e.g. a general purpose GPU), microprocessors, any processing unit which is designed to accelerate tasks outside of a CPU, etc. A computer or computer system may comprise one or more processors. Those skilled in the art will realize that such processing capabilities are incorporated into many different devices and therefore the term 'computer' includes set top boxes, media players, digital radios, PCs, servers, mobile telephones, personal digital assistants and many other devices.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture NN hardware comprising any apparatus described herein. An integrated circuit definition dataset may be, for example, an integrated circuit description.

Therefore, there may be provided a method of manufacturing, at an integrated circuit manufacturing system, accumulator hardware, multiplication hardware or convolution hardware as described herein. Furthermore, there may be provided an integrated circuit definition dataset that, when processed in an integrated circuit manufacturing system, causes the method of manufacturing accumulator hardware, multiplication hardware or convolution hardware to be performed.

An integrated circuit definition dataset may be in the form of computer code, for example as a netlist, code for configuring a programmable chip, as a hardware description language defining an integrated circuit at any level, including as register transfer level (RTL) code, as high-level circuit representations such as Verilog or VHDL, and as low-level circuit representations such as OASIS (RTM) and GDSII. Higher level representations which logically define an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

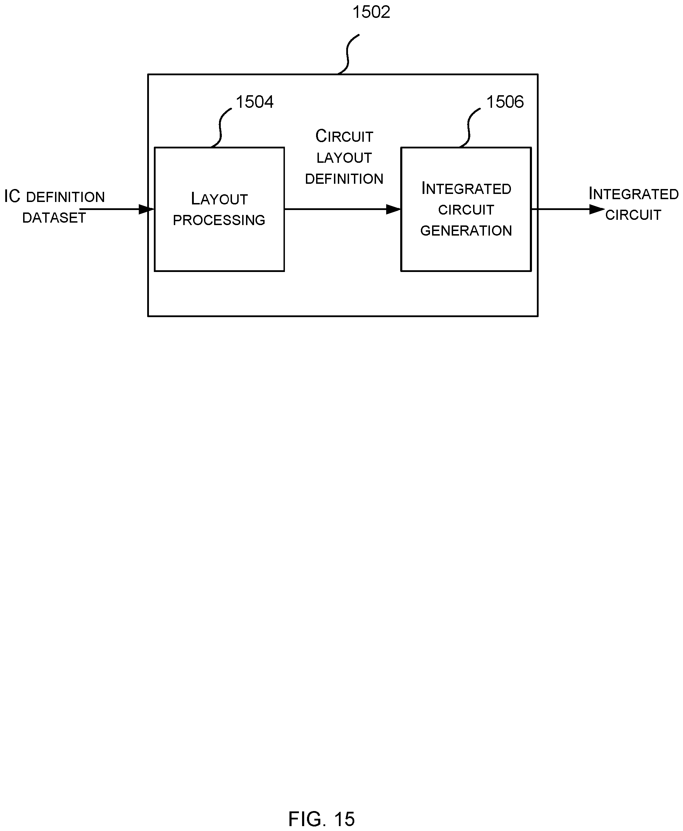

An example of processing an integrated circuit definition dataset at an integrated circuit manufacturing system so as to configure the system to manufacture accumulator hardware, multiplication hardware or convolution hardware will now be described with respect to FIG. 15.

FIG. 15 shows an example of an integrated circuit (IC) manufacturing system 1502 which is configured to manufacture accumulator hardware, multiplication hardware, convolution hardware or a NNA as described in any of the examples herein. In particular, the IC manufacturing system 1502 comprises a layout processing system 1504 and an integrated circuit generation system 1506. The IC manufacturing system 1502 is configured to receive an IC definition dataset (e.g. defining accumulator hardware, multiplication hardware, convolution hardware or a NNA as described in any of the examples herein), process the IC definition dataset, and generate an IC according to the IC definition dataset (e.g. which embodies accumulator hardware, multiplication hardware, convolution hardware or a NNA as described in any of the examples herein). The processing of the IC definition dataset configures the IC manufacturing system 1502 to manufacture an integrated circuit embodying accumulator hardware, multiplication hardware or convolution hardware as described in any of the examples herein.

The layout processing system 1504 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1504 has determined the circuit layout it may output a circuit layout definition to the IC generation system 1506. A circuit layout definition may be, for example, a circuit layout description.

The IC generation system 1506 generates an IC according to the circuit layout definition, as is known in the art. For example, the IC generation system 1506 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1506 may be in the form of computer-readable code which the IC generation system 1506 can use to form a suitable mask for use in generating an IC.

The different processes performed by the IC manufacturing system 1502 may be implemented all in one location, e.g. by one party. Alternatively, the IC manufacturing system 1502 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture accumulator hardware, multiplication hardware or convolution hardware without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 15 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 15, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The methods described herein may be performed by a computer configured with software in machine readable form stored on a tangible storage medium e.g. in the form of a computer program comprising computer readable program code for configuring a computer to perform the constituent portions of described methods or in the form of a computer program comprising computer program code means adapted to perform all the steps of any of the methods described herein when the program is run on a computer and where the computer program may be embodied on a computer readable storage medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

The hardware components described herein may be generated by a non-transitory computer readable storage medium having encoded thereon computer readable program code.

Memories storing machine executable data for use in implementing disclosed aspects can be non-transitory media. Non-transitory media can be volatile or non-volatile. Examples of volatile non-transitory media include semiconductor-based memory, such as SRAM or DRAM. Examples of technologies that can be used to implement non-volatile memory include optical and magnetic memory technologies, flash memory, phase change memory, resistive RAM.

A particular reference to "logic" refers to structure that performs a function or functions. An example of logic includes circuitry that is arranged to perform those function(s). For example, such circuitry may include transistors and/or other hardware elements available in a manufacturing process. Such transistors and/or other elements may be used to form circuitry or structures that implement and/or contain memory, such as registers, flip flops, or latches, logical operators, such as Boolean operations, mathematical operators, such as adders, multipliers, or shifters, and interconnect, by way of example. Such elements may be provided as custom circuits or standard cell libraries, macros, or at other levels of abstraction. Such elements may be interconnected in a specific arrangement. Logic may include circuitry that is fixed function and circuitry can be programmed to perform a function or functions; such programming may be provided from a firmware or software update or control mechanism. Logic identified to perform one function may also include logic that implements a constituent function or sub-process. In an example, hardware logic has circuitry that implements a fixed function operation, or operations, state machine or process.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget."

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. Accumulator hardware logic (100, 200, 300, 400, 500, 600) comprising:

   a first addition logic unit (102) comprising a first input, a second input and an output, each of the first and second inputs arranged to receive an input value in each clock cycle;
   a second addition logic unit (104) comprising a first input, a second input and an output and wherein the first input is connected directly to the output of the first addition logic unit (102);
   a store (106) arranged to store a result output by the second addition logic unit (104); and
   at least one of shifting hardware (110) and negation hardware (510) positioned in a feedback path between the store (106) and the second input of the second addition logic unit (104), wherein the shifting hardware (110) is configured to perform a shift by a fixed number of bit positions in a fixed direction.

2. The accumulator hardware logic according to claim 1, comprising shifting hardware (110) positioned in the feedback path.

EP 4 254 170 A1

3. The accumulator hardware logic according to claim 2, wherein the second input of the second addition logic unit is connected to the feedback path comprising the shifting hardware.

4. The accumulator hardware logic (100, 200, 300, 400) according to any of claims 2-3, further comprising: selection hardware (108) positioned in the feedback path and configured to select a first zero input in a first clock cycle of an accumulation operation and to select a second input from the store (106) in subsequent clock cycles of the accumulation operation.

5. The accumulator hardware logic (100) according to claim 4, wherein the selection hardware (108) is:

    positioned in the feedback path between the store (106) and the shifting hardware (110); or
    positioned in the feedback path between the shifting hardware (110) and the second addition logic unit (104).

6. The accumulator hardware logic (300, 400) according to any of claims 2-5, further comprising: variable shifting logic (302) configured to perform a shift by a controllable number of bit positions in a controllable direction, wherein the variable shifting logic comprises an input arranged to receive a value output by the second addition logic unit (104).

7. The accumulator hardware logic according to claim 6, wherein the controllable number is zero for each clock cycle of an accumulation operation except for a final clock cycle of the accumulation operation.

8. The accumulator hardware logic (400) according to claim 6 or 7, wherein the variable shifting logic (302) comprises an output to the store (106) and the store is arranged to store the result output by the second addition logic unit and received from the variable shifting logic.

9. The accumulator hardware logic (300) according to claim 6 or 7, further comprising: a second store (304) arranged to store a result output by the variable shifting logic (302).

10. The accumulator hardware logic according to any of the preceding claims, further comprising both shifting hardware and negation hardware logic positioned in the feedback path.

11. Multiplication hardware comprising the accumulator hardware logic according to any of the preceding claims, the multiplication hardware arranged to multiply two values together over two clock cycles and further comprising:

    a first multiplier (802) arranged to receive a first input and a second input each clock cycle, multiply the first and second inputs together and output the result;
    a second multiplier (803) arranged to receive a third input and a fourth input each clock cycle, multiply the third and fourth inputs and output the result to the second input of the accumulator hardware logic; and
    left-shifting hardware (806) arranged to receive the output from the first multiplier, perform left shifting by a predefined number of bits and output a result to the first input of the accumulator hardware logic,

    wherein:

    each of the two values are divided into a high part and a low part, the low parts each comprising the predefined number of least significant bits of the value and the high parts each comprising all remaining bits of the value,
    in a first clock cycle, the first and second inputs are the high parts of the two values and the third and fourth inputs are the high part of a first of the two values and the low part of a second of the two values,
    in a second clock cycle, the third and fourth inputs are the low parts of the two values and the first and second inputs are the high part of the second of the two values and the low part of the first of the two values.

12. Multiplication hardware comprising the accumulator hardware logic according to any of claims 1-10, the multiplication hardware arranged to multiply two values together over two clock cycles and further comprising:

    a first plurality of multipliers (1201-1203) each arranged to receive a different pair of inputs each clock cycle, multiply the pair of inputs together and output the result;
    a second plurality of multipliers (1205-1207) each arranged to receive a different pair of inputs each clock cycle, multiply the pair of inputs together and output the result;

20

a third multiplier (1204) arranged to receive a pair of inputs each clock cycle, multiply the pair of inputs together and output the result;

a fourth multiplier (1208) arranged to receive a pair of inputs each clock cycle, multiply the pair of inputs together and output the result;

a first plurality of left-shifting hardware (1210-1212), each arranged to receive a result from a different one of the first plurality of multipliers and output a left-shifted result;

a second plurality of left-shifting hardware (1213-1215), each arranged to receive a result from a different one of the second plurality of multipliers and output a left-shifted result;

a first plurality of negation hardware (1220-1221), each arranged to receive a left-shifted result from a different one of the first plurality of left-shifting hardware;

a second plurality of negation hardware (1223-1225), each arranged to receive a left-shifted result from a different one of the second plurality of left-shifting hardware;

first addition logic (1230) arranged to receive and sum the results output by each of the first plurality of negation hardware and the third multiplier;

second addition logic (1232) arranged to receive and sum the results output by each of the second plurality of negation hardware and the fourth multiplier and output the result to the second input of the accumulator hardware logic; and

left-shifting hardware (806) arranged to receive the output from the first addition logic, perform left shifting by a predefined number of bits and output a result to the first input of the accumulator hardware logic,

wherein:

each of the two values are divided into a high part and a low part, the low parts each comprising the predefined number of least significant bits of the value and the high parts each comprising all remaining bits of the value, and each of the high parts and low parts are further divided into a portion comprising a most significant bit and a portion comprising all other bits of the part,

in a first clock cycle,

the pair of inputs to the third multiplier are the portions of the high parts of the two values that comprise all bits apart from the most significant bits,

the pairs of inputs to the first plurality of multipliers comprise a pair comprising the most significant bits of the high part of each input value and a plurality of pairs comprising other combinations of portions of the high parts of the two values,

the pair of inputs to the fourth multiplier are the portion of the high part of a first of the input values comprising all bits apart from the most significant bits and the portion of the low part of a second of the input values comprising all bits apart from the most significant bits, and

the pairs of inputs to the second plurality of multipliers comprise a pair comprising the most significant bits of the high part of each input value and a plurality of pairs comprising other combinations of a portion from the high part of one input value and a portion from the low part of the other input value,

in a second clock cycle,

the pair of inputs to the third multiplier are the portion of the high part of the second of the input values comprising all bits apart from the most significant bits and the portion of the low part of the first of the input values comprising all bits apart from the most significant bits,

the pairs of inputs to the first plurality of multipliers comprise a plurality of pairs comprising other combinations of a portion from the high part of one input value and a portion from the low part of the other input value,

the pair of inputs to the fourth multiplier are the portions of the low parts of the two values that comprise all bits apart from the most significant bits, and

the pairs of inputs to the second plurality of multipliers comprise a pair comprising the most significant bits of the high part of each input value and a plurality of pairs comprising other combinations of portions of the low parts of the two values.

13. Convolution hardware comprising the accumulator hardware logic according to any of claims 1-10, the convolution hardware arranged to multiply N pairs of two values together over two clock cycles and further comprising:

N first multipliers (802), each arranged to receive a first input and a second input each clock cycle, multiply the first and second inputs together and output the result;

first addition logic (902) arranged to sum the results output by each of the N first multipliers;
N second multipliers (803), each arranged to receive a third input and a fourth input each clock cycle, multiply the third and fourth inputs and output the result;
second addition logic (904) arranged to sum the results output by each of the N second multipliers and output the result to the second input of the accumulator hardware logic; and
left-shifting hardware (806) arranged to receive the output from the first addition logic, perform left shifting by a predefined number of bits and output a result to the first input of the accumulator hardware logic,

wherein, for each pair of values:

each of the values are divided into a high part and a low part, the low parts each comprising the predefined number of least significant bits of the value and the high parts each comprising all remaining bits of the value,
in a first clock cycle, the first and second inputs to one of the first multipliers are the high parts of the two values and the third and fourth inputs to one of the second multipliers are the high part of a first of the two values and the low part of a second of the two values, each of the N first multipliers receiving parts from a different pair of values,
in a second clock cycle, the third and fourth inputs to the one of the second multipliers are the low parts of the two values and the first and second inputs to the one of the first multipliers are the high part of the second of the two values and the low part of the first of the two values.

14. Convolution hardware comprising the accumulator hardware logic according to any of claims 1-10, the multiplication hardware arranged to multiply N pairs of two values together over two clock cycles and further comprising:

a first plurality of groups of N multipliers (1201-1203) each multiplier arranged to receive a different pair of inputs each clock cycle, multiply the pair of inputs together and output the result;
a second plurality of groups of N multipliers (1205-1207) each multiplier arranged to receive a different pair of inputs each clock cycle, multiply the pair of inputs together and output the result;
N third multipliers (1204) arranged to receive a pair of inputs each clock cycle, multiply the pair of inputs together and output the result;
N fourth multipliers (1208) arranged to receive a pair of inputs each clock cycle, multiply the pair of inputs together and output the result;
a first plurality of addition logic elements (1301-1303) each arranged to sum the results output by a group of N multipliers of the first plurality of groups of N multipliers;
a second plurality of addition logic elements (1305-1307) each arranged to sum the results output by a group of N multipliers of the second plurality of groups of N multipliers;
a third addition logic element (1304) arranged to sum the results output by the N third multipliers;
a fourth addition logic element (1308) arranged to sum the results output by the N fourth multipliers;
a first plurality of left-shifting hardware (1210-1212), each arranged to receive a result from a different one of the first plurality of addition logic elements and output a left-shifted result;
a second plurality of left-shifting hardware (1213-1215), each arranged to receive a result from a different one of the second plurality of addition logic elements and output a left-shifted result;
a first plurality of negation hardware (1220-1221), each arranged to receive a left-shifted result from a different one of the first plurality of left-shifting hardware;
a second plurality of negation hardware (1223-1225), each arranged to receive a left-shifted result from a different one of the second plurality of left-shifting hardware;
first addition logic (1230) arranged to receive and sum the results output by each of the first plurality of negation hardware and the third addition logic element;
second addition logic (1232) arranged to receive and sum the results output by each of the second plurality of negation hardware and the fourth addition logic element and output the result to the second input of the accumulator hardware logic; and
left-shifting hardware (806) arranged to receive the output from the first addition logic, perform left shifting by a predefined number of bits and output a result to the first input of the accumulator hardware logic,

wherein, for each pair of values:

each of the two values are divided into a high part and a low part, the low parts each comprising the predefined number of least significant bits of the value and the high parts each comprising all remaining bits of the value, and each of the high parts and low parts are further divided into a portion comprising a most significant bit and a portion comprising all other bits of the part,

in a first clock cycle,

the pair of inputs to one of the N third multipliers are the portions of the high parts of the two values that comprise all bits apart from the most significant bits,

the pairs of inputs to one of the multipliers from each group of N multipliers in the first plurality of groups of N multipliers comprise a pair comprising the most significant bits of the high part of each input value and a plurality of pairs comprising other combinations of portions of the high parts of the two values,

the pair of inputs to one of the N fourth multipliers are the portion of the high part of a first of the input values comprising all bits apart from the most significant bits and the portion of the low part of a second of the input values comprising all bits apart from the most significant bits, and

the pairs of inputs to one of the multipliers from each group of N multipliers in the second plurality of groups of N multipliers comprise a pair comprising the most significant bits of the high part of each input value and a plurality of pairs comprising other combinations of a portion from the high part of one input value and a portion from the low part of the other input value,

in a second clock cycle,

the pair of inputs to one of the N third multipliers are the portion of the high part of the second of the input values comprising all bits apart from the most significant bits and the portion of the low part of the first of the input values comprising all bits apart from the most significant bits,

the pairs of inputs to one of the multipliers from each group of N multipliers in the first plurality of groups of N multipliers comprise a plurality of pairs comprising other combinations of a portion from the high part of one input value and a portion from the low part of the other input value,

the pair of inputs to one of the N fourth multipliers are the portions of the low parts of the two values that comprise all bits apart from the most significant bits, and

the pairs of inputs to one of the multipliers from each group of N multipliers in the second plurality of groups of N multipliers comprise a pair comprising the most significant bits of the high part of each input value and a plurality of pairs comprising other combinations of portions of the low parts of the two values.

15. A method of performing accumulation in hardware logic (100, 200, 300, 400), the method comprising:

receiving, by a first addition logic unit (102) a first input value via a first input and a second input value via a second input in each clock cycle;

receiving, by a second addition logic unit (104) an input directly from the output of the first addition logic unit (102) and an input from a feedback path from a store (106), the feedback path comprising at least one of shifting hardware (110) and negation hardware, wherein the shifting hardware (110) is configured to perform a shift by a fixed number of bit positions in a fixed direction; and

storing, in a store (106), a result output by the second addition logic unit (104).

100

INPUT $\alpha_i$    INPUT $\beta_i$

0

FIRST
ADDITION
LOGIC UNIT    102

108

$(\alpha_i + \beta_i)$

SHIFTING
HARDWARE

110

SECOND
ADDITION
LOGIC UNIT    104

OUTPUT ←— — —

STORE    106

OUTPUT

FIG. 1

200

INPUT $\alpha_i$                    INPUT $\beta_i$                    0

FIRST
ADDITION
LOGIC
UNIT                    102                                    108

SHIFTING
HARDWARE                    110

SECOND
ADDITION
LOGIC UNIT                    104

OUTPUT ◄ — — — —

STORE                    106

OUTPUT

FIG. 2

FIG. 3

400

INPUT $\alpha_i$

INPUT $\beta_i$

0

FIRST
ADDITION
LOGIC UNIT
102

108

SECOND
ADDITION
LOGIC UNIT
104

SHIFTING
HARDWARE
110

VARIABLE
SHIFTING
LOGIC
302

STORE
106

OUTPUT

FIG. 4

500

INPUT $\alpha_i$        INPUT $\beta_i$        0

FIRST
ADDITION
LOGIC
UNIT    ~ 102                    108

                                            NEGATION
                                            HARDWARE    ~ 510

SECOND
ADDITION
LOGIC UNIT    ~ 104

OUTPUT ◄ — — — —

STORE    ~ 106

OUTPUT

FIG. 5

600

INPUT $\alpha_i$         INPUT $\beta_i$

0

FIRST
ADDITION
LOGIC
UNIT                    102

108

SHIFTING
HARDWARE                110

SECOND
ADDITION
LOGIC UNIT              104

NEGATION
HARDWARE               510

OUTPUT ←— — —

STORE                   106

OUTPUT

FIG. 6

FIG. 7

A_i   B_i                           C_i   D_i

$\otimes$ ~ 802                    $\otimes$ ~ 804

[<< ] ~ 806

$\alpha_i$          $\beta_i$

ACCUMULATOR
HARDWARE          ~ 800

OUTPUT

FIG. 8

$A_{i,n}$  $B_{i,n}$  $C_{i,n}$  $D_{i,n}$

⊗ ⟋802  ........ N    ⊗  ........ N
                              ⟋804

$(A_{i,n} \bullet B_{i,n})$  ........ N    $(C_{i,n} \bullet D_{i,n})$  ........ N

⊕ ∿ 902    ⊕ ∿ 904

[«] ∿ 806

$\alpha_i$    $\beta_i$

| ACCUMULATOR HARDWARE |
|---|

∿ 800

OUTPUT

FIG. 9

FIG. 10

FIG. 11

FIG. 12

FIG. 13

1402          1404

1414

CPU          GPU

DISPLAY    1416

1420

SPEAKERS    1418

CAMERA    1417

1406    MEMORY

FIG. 14

1502

1504

1506

CIRCUIT
LAYOUT
DEFINITION

IC DEFINITION
DATASET

LAYOUT
PROCESSING

INTEGRATED
CIRCUIT
GENERATION

INTEGRATED
CIRCUIT

FIG. 15

Europäisches
Patentamt
European
Patent Office
Office européen
des brevets

# EUROPEAN SEARCH REPORT

**Application Number**

EP 23 16 4861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/143837 A1 (DUBORGEL OLIVIER [FR]) 3 October 2002 (2002-10-03) * paragraphs [0027] - [0033]; figure 1 * ----- | 1-15 | INV. G06F7/509 G06F7/53 |
| A | US 2012/233230 A1 (LANGHAMMER MARTIN [GB]) 13 September 2012 (2012-09-13) * the whole document * ----- | 1-15 | ADD. G06F7/74 |

**TECHNICAL FIELDS
SEARCHED      (IPC)**

G06F

The present search report has been drawn up for all claims

| Place of search | Date of completion of the search | Examiner |
|---|---|---|
| Munich | 1 August 2023 | Winkelbauer, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 4861

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2023

| Patent document cited in search report | | Publication date | Patent family member(s) | | Publication date |
|---|---|---|---|---|---|
| US 2002143837 | A1 | 03-10-2002 | FR | 2819073 A1 | 05-07-2002 |
| | | | US | 2002143837 A1 | 03-10-2002 |
| US 2012233230 | A1 | 13-09-2012 | GB | 2488881 A | 12-09-2012 |
| | | | NL | 2008428 C2 | 11-09-2012 |
| | | | US | 2012233230 A1 | 13-09-2012 |

EPO FORM P0459

For more details about this annex : see Official Journal of the European Patent Office, No. 12/82

**REFERENCES CITED IN THE DESCRIPTION**

**Patent documents cited in the description**

- GB 2204647 A